# EUROPEAN PATENT SPECIFICATION

(11) **EP 4 060 620 B1**
(45) Date of publication and mention of the grant of the patent: **17.06.2026**
(21) Application number: 22153251.8
(22) Date of filing: 25.01.2022
(51) Int. Cl.: G06T 15/00, G06T 1/20, G06T 1/60, A63F 13/355, A63F 13/50

(54) **CLOUD GAMING GPU WITH INTEGRATED NIC AND SHARED FRAME BUFFER ACCESS FOR LOWER LATENCY**
CLOUD-GAMING-GPU MIT INTEGRIERTER NETZWERKSCHNITTSTELLENSTEUERUNG (NIC) UND GETEILTEM RAHMENPUFFERZUGRIFF FÜR NIEDRIGERE LATENZ
GPU DE JEU EN NUAGE AVEC CARTE RÉSEAU INTÉGRÉE ET ACCÈS À LA MÉMOIRE TAMPON DE TRAME PARTAGÉE POUR UNE LATENCE PLUS FAIBLE

(30) Priority: 15.03.2021 US 202117202065
(43) Date of publication of application: 21.09.2022
(73) Proprietor: INTEL Corporation, Santa Clara, CA 95054 (US)
(72) Inventor: POHL, Daniel, 82178 Puchheim (DE)
(74) Representative: Rummler, Felix

(56) References cited:
- WO-A1-2008/018860
- US-A1- 2009 305 790
- US-A1- 2010 013 839
- US-A1- 2010 166 062
- US-A1- 2018 063 555
- US-B1- 6 518 970
- US-B2- 7 995 069

## Description

### BACKGROUND INFORMATION

Cloud gaming is a type of online gaming where video games are executed on remote servers in data centers (*aka* the "Cloud") and streamed as video content to a player's device via local client software used to render the video content and provide player inputs to the remote server(s). This contrasts with traditional means of gaming, where a game runs locally on a user's video game console, personal computer, or mobile device.

Latency is one of the most important criteria for successful cloud gaming and as well as for interactive in-home streaming (e.g., a PC (personal computer) for rendering, but playing on a tablet in another room). One approach used today is to render video content and prepare encoded image data to be streamed using discrete graphics cards with a Graphic Processing Unit (GPU) and then using the platform's Central Processing Unit (CPU) and network card to stream the image data over a network to a player's device. However, this results in a bottleneck since the GPU rendered and/or encoded data must first be copied to the main PC or device memory, and then gets transferred to the network card for the image data to be sent out. US 2018/0063555 A1 relates to a network-enabled graphics processing module. US 2010/0013839 A1 relates to integrated GPU, NIC and compression hardware for hosted graphics. US 2010/00166062 A1 relates to selecting a video encoding format based on feedback data. US 6518970 B1 relates to a graphics processing device with integrated programmable synchronization signal generation. US 7995069 B2 relates to a graphics system with embedded frame buffer having reconfigurable pixel formats.

### SUMMARY

The present invention is defined by the independent claims. Further embodiments are set forth in the dependent claims. Any references to inventions or embodiments not falling within the scope of the independent claims are to be interpreted as examples useful for understanding the invention.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic diagram of a graphics card including a GPU with integrated video codec and integrated NIC, according to one embodiment;
Figure 1a is a schematic diagram of a graphics card including a GPU with integrated video codec coupled directly to a NIC, according to one embodiment;
Figure 1b is a schematic diagram of a graphics card including a GPU with integrated video codec and a NIC combined on a multi-chip module, according to one embodiment;
Figure 1c is a schematic diagram of a graphics card including a GPU with integrated tile encoder/decoder and integrated NIC, according to one embodiment;
Figure 2 is a schematic diagram illustrating use of the graphics card of Figure 1 in a game server and a game client device, according to one embodiment;
Figure 2a is a schematic diagram illustrating use of the graphics card of Figure 1a in a game server and a game client device, according to one embodiment;
Figure 3 is a schematic diagram illustrating use of the graphics card of Figure 1 in a game server and illustrating a game laptop client including a GPU with an integrated network interface for communicating directly with a WiFi chip, according to one embodiment;
Figure 4 is a diagram illustrating an exemplary frame encoding and display scheme consisting of I-frames, P-frames, and B-frames;
Figure 5 is a schematic diagram illustrating an end-to-end image data flow between a game server 200 and a desktop game client 202, according to one embodiment.
Figure 6 is a flowchart illustrating operations performed to facilitate the end-to-end image data flow scheme of Figure 5, according to one embodiment;
Figure 7a is a diagram illustrating generation, encoding, and streaming of game tiles using a GPU with integrated tile encoder, according to one embodiment;
Figure 7b is a diagram illustrating handling of a stream of game tiles received at a game client, including tile decoding and regeneration using a GPU with integrated tile decoder, according to one embodiment;
Figure 8 is a schematic diagram of a game server including multiple graphics cards and on or more network cards installed in expansion slots of a main board, according to one embodiment;
Figure 8a is a schematic diagram of a game server including multiple graphics cards installed in expansion slots of a main board on which a NIC chip is mounted, according to one embodiment;
Figure 8b is a schematic diagram of a game server including multiple graphics cards and a blade server installed in slots or mating connectors of a backplane, mid-plane, or base-plane, according to one embodiment; and
Figure 9 is a schematic diagram of an integrated NIC, according to one embodiment.

### DETAILED DESCRIPTION

Embodiments of methods and apparatus for cloud gaming GPU with integrated Network Interface Controller (NIC) and shared frame buffer access for lower latency are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

In accordance with aspects of the embodiments disclosed herein, a GPU with an integrated encoder and an integrated NIC is provided. The GPU includes one or more frame buffers that provide shared access to the integrated encoder/decoder and other GPU components. The GPU is configured to process outbound and inbound game image content that is encoded and decoded using a video codec or using a game tile encoder and decoder. For example, when implemented in a cloud game server of a local video game host, video game frames generated by the GPU and buffered in the frame buffer(s) are encoded by the integrated encoder and forwarded directly to the NIC to be packetized and streamed using a media streaming protocol. Inbound streamed media content is depacketized by the NIC and decoded by the integrated decoder, which writes the decoded content to a frame buffer to regenerate the video game frames on a game client device. The video game frames are then displayed on a client device display.

Generally, the GPU may be implemented in a graphics card or on a main board of a game client device, such as a laptop or notebook computer or mobile device. The graphics card provides reduced latency for when generating outbound game content and for processing inbound game content since the processing path does not include forwarding encoded data to or from the CPU.

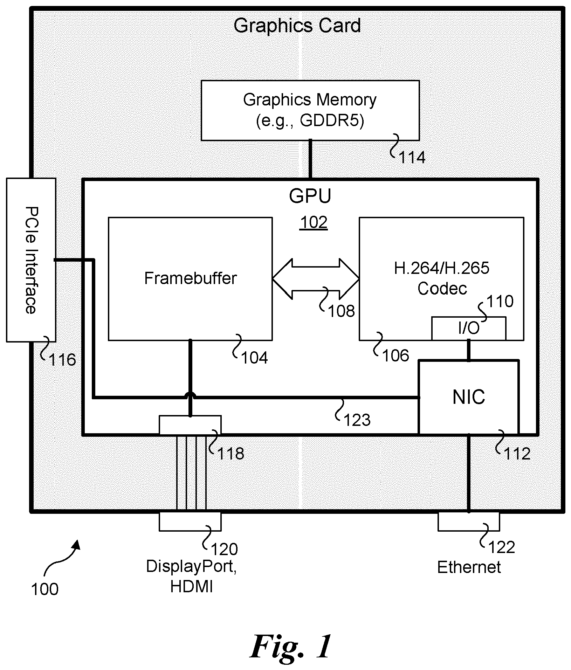

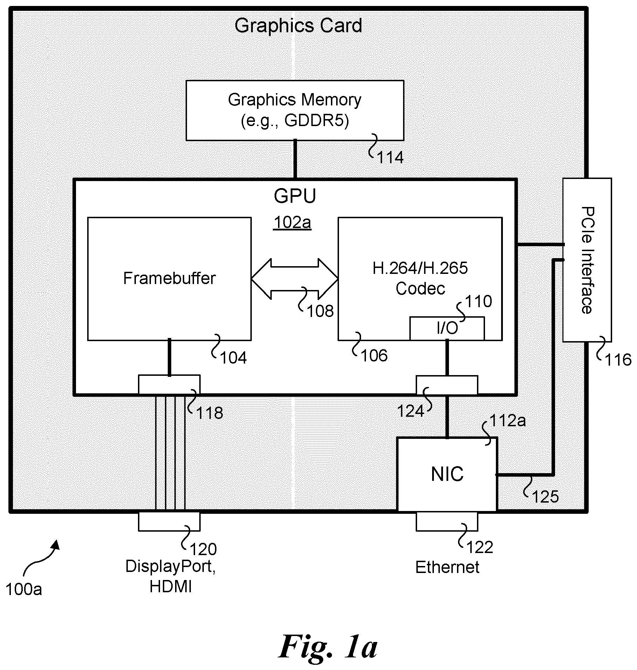

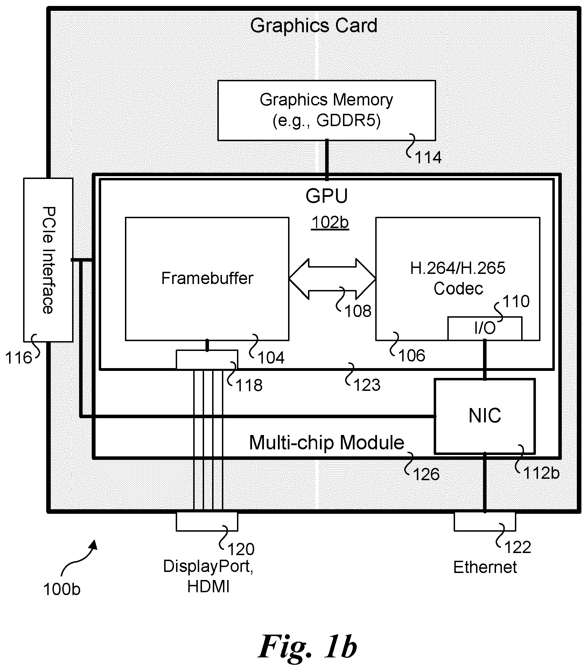

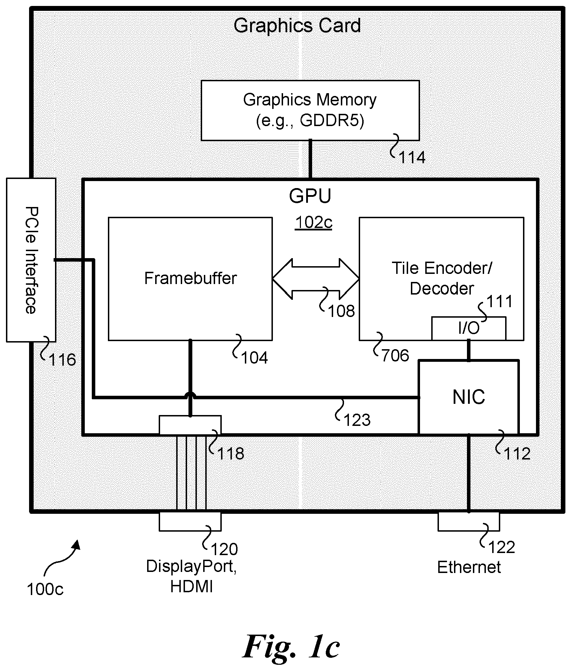

Figure 1 shows a graphics card 100 including a GPU 102 having a frame buffer 104 accessed by an H.264/H.265 video codec 106 via an interface 108. H.264/H.265 video codec 106 includes an I/O interface 110 that is coupled to a NIC 112, which is onboard the GPU 102 in this embodiment. GPU 102 is couped to graphics memory 114, such as GDDR5 memory in the illustrated embodiment. Other types of graphics memory may be used in a similar manner. Moreover, all or a portion of graphics memory may reside on the GPU.

GPU 102 and graphics card 100 have additional interfaces including a PCIe (Peripheral Component Interconnect Express) interface 116 coupled to GPU 102, a graphics output 118 on GPU 102 coupled to one or more graphics ports 120, such as a DisplayPort or HDMI port, and an Ethernet port 122 coupled to NIC 112. As depicted by a datapath 123, NIC 112 may also communicate with a host CPU (not shown) via PCIe interface 116.

In addition to having an GPU with an on-chip NIC, a graphics card may include a GPU coupled to an off-chip NIC, such as shown in graphics card 100a of Figure 1a. Under this configuration, a GPU 102a includes an I/O interface 124 coupled to a NIC 112a. I/O interface 124 is coupled to I/O interface 110 on H.264/H.265 video codec 106. NIC 112a is also coupled to PCIe interface 116, as depicted by a link 125.

In addition to integrating a NIC on a GPU *(e.g.,* as embedded circuitry and/or as a circuit die on the same substrate as the GPU circuitry), a multi-chip module or package including a GPU chip and a NIC chip may also be used. An example of this is shown in Figure 1b, wherein a graphics card 100b includes a GPU 102b and NIC 112b are part of a multi-chip module 126.

In another embodiment (not shown), a CPU and GPU 100 or 100a may be integrated on in a System on a Chip (SoC). Alternatively, a CPU, GPU 100b, and NIC 112b may be implemented in a multi-chip module or package or a CPU+GPU SoC and a NIC chip may implemented on a multi-chip module or package.

Generally, graphics cards 100, 100a, and 100b may be installed in a PCIe slot in a server or the like, implemented as a mezzanine card or the like in a server, or as a daughterboard on a blade server or server module. As described and illustrated below, similar components may be implemented in a graphics chipset or the like for devices with other form factors, such as laptops, notebooks, tablets, and mobile phones.

Frame information can be obtained from frame buffer 104 such as the frame's pixel resolution, frame buffer format (e.g., RGBA 8-bit or RGBA 32-bit and so on) and access to a frame buffer pointer, which might change over time in the case where double or triple buffering is used for rendering. Furthermore, besides to the color data information, depth data from the GPU buffer may also be obtained for some implementations. For example, for scenarios like stereoscopic gaming it may be advantageous to stream the depth data along with the color data to the client.

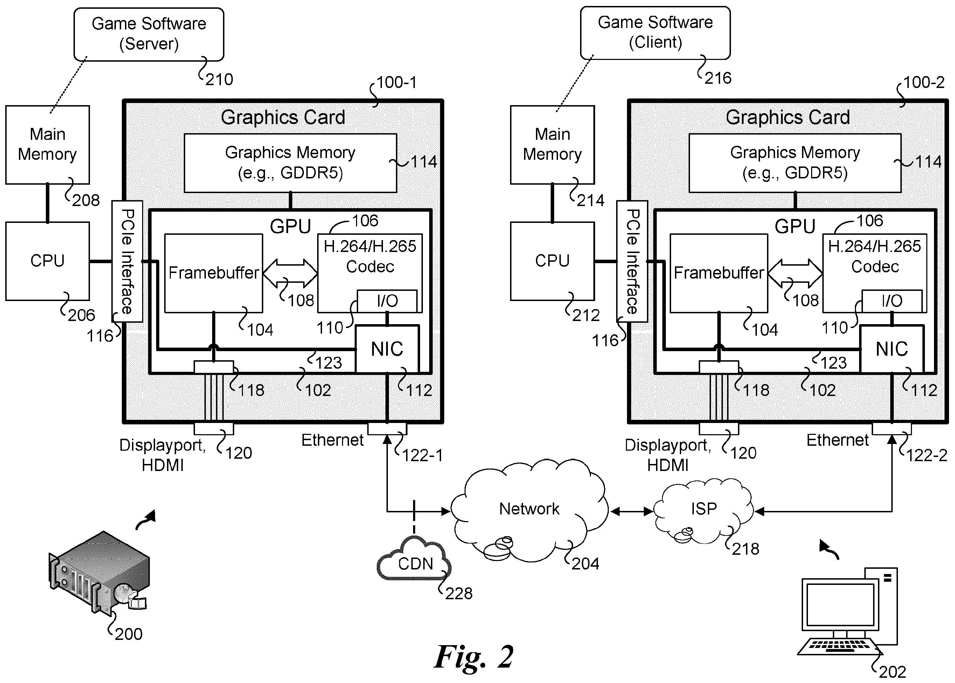

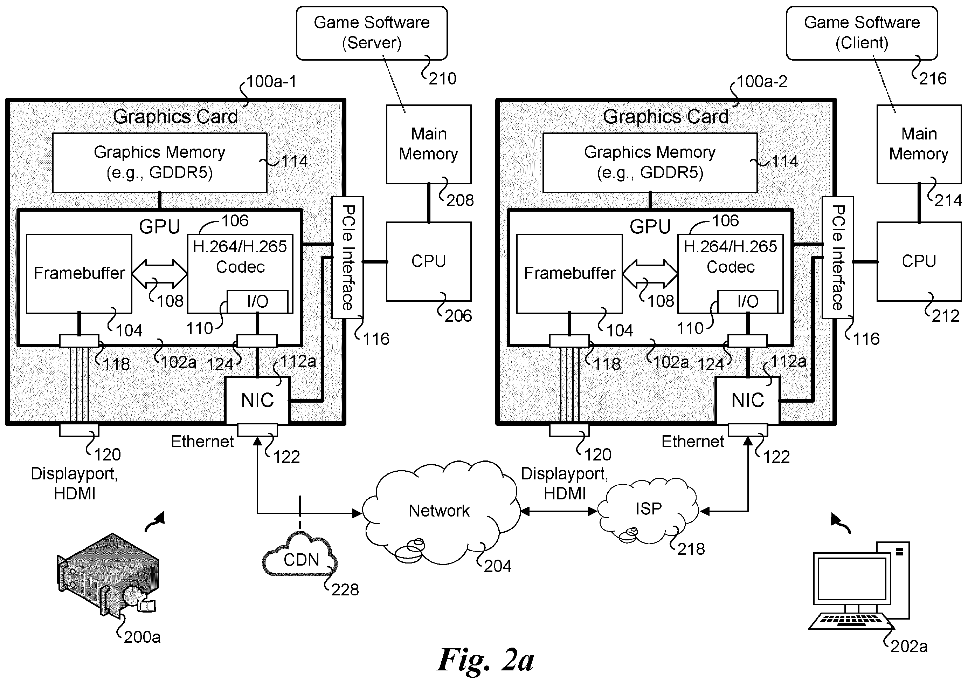

Figure 2 shows an embodiment of a cloud gaming implementation including a game server 200 coupled to a desktop game client 202 via a network 204. Each of game server 200 and desktop game client 202 have a respective instance of graphics card 100 of Figure 1, as depicted by graphics cards 100-1 and 100-2. Game server 200 includes a CPU 206 comprising a multi-core processor coupled to main memory 208 in which game server software 210 is loaded to be executed on one or more cores of CPU 206. CPU 206 is coupled to graphics card 100-1 via PCIe interface 116, while Ethernet port 122-1 is coupled to network 204 which is representative of multiple interconnected networks such as the Internet.

In practice, cloud game servers may deliver content via a delivery network (CDN) 228. As shown in Figure 2, CDN 228 sits between game server 200 and network 204.

Desktop game client 202 generally depicts various types of game clients that may be implemented using a desktop computer or the like. In the illustrated embodiment, graphic card 100-2 is a PCIe graphics card that is installed in a PCIe slot of the desktop computer. In some cases, a PCIe graphics card may be connected via one PCIe slot put occupy multiple expansion slots for the desktop computer. Desktop game client 202 includes a CPU 212, which is a multi-core processor coupled to main memory 214 in which client-side game software 216 loaded, to be executed by one of more cores on CPU 212. Ethernet port 122-2 of graphics card 100-2 is coupled to network 204. For a typical game player, Desktop game client 202 will be coupled to a Local Area Network (LAN) which will include a switch coupled to a cable modem or similar Wide Area Network (WAN) access device that is coupled to an Internet Service Provider (ISP) network 218, which in turn is coupled to the network 204.

Figure 2a shows an embodiment of a cloud gaming implementation including a game server 200a coupled to a desktop game client 202a via network 204 and ISP network 218. Each of game server 200a and desktop game client 202a have a respective instance of graphics card 100a of Figure 1a, depicted as graphics cards 100a-1 and 100a-2. Generally, like-numbered components and blocks in Figures 2 and 2a are similar and perform similar operations. As described below in further detail, a difference between the cloud gaming implementations of Figures 2 and 2a is out video control inputs and non-image data are handled. At the same time, the processing and forwarding of image data in the embodiments of Figures 2 and 2a are similar.

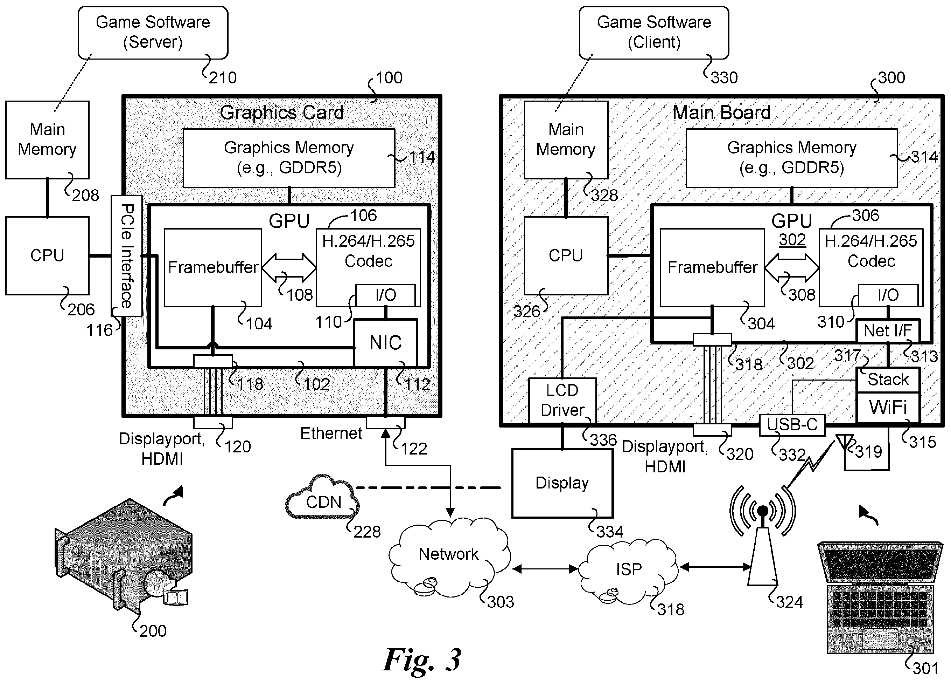

Figure 3 shows a cloud gaming implementation including game server 200 coupled to a laptop game client 301 via a CDN 228, network 303 and an ISP network 318. Game server 200 has the same configuration shown in Figure 2, as described above. As an option, game server 200 may be replaced by game server 200a of Figure 2.

Laptop game client 301 includes a main board 300 comprising a GPU 302 coupled to graphics memory 314, a CPU 326 coupled to main memory 328 and to GPU 302, a WiFi^{™} chip 315, and DisplayPort and/or HDMI port 320 and a USB-C interface 332. As before client-side game software is loaded into main memory 328 and executed on one or more cores on CPU 326. GPU 302 includes a frame buffer 304 accessed by an H.264/H.265 video codec 306 via an interface 308. H.264/H.265 video codec 306 includes an I/O interface 310 that is coupled to a network interface 313, which in turn is coupled to a hardware-based network stack 317. Generally, hardware-based network stack 317 may be integrated on WiFi^{™} chip 315 or comprise a separate component. Laptop game client will generally include a mobile chipset (not shown) coupled to CPU 326 that supports various communication ports and I/O interconnects, such as USB-C, USB 3.0, USB 2.0 and PCIe interconnects.

Under the illustrated configuration for Laptop game client 301, wireless communication is facilitated by a wireless access point 324 and an antenna 319. As before, wireless access point would be connected to a cable modem or similar ISP access means that would be connected to ISP network 318. As an option, an Ethernet adaptor may be connected to USB-C interface 332, enabling laptop game client 301 to employ an Ethernet link to ISP network 318 (via an Ethernet switch and cable modem).

Main board 300 would be contained within a laptop housing to which a display 334 would is coupled. Generally, the display will be driven by applicable circuitry that is either built into GPU 302 or implemented on a discrete component coupled to GPU 302, such as depicted by an LCD driver 336.

Under the embodiments herein, the NIC may be configured via a software running on the CPU directly (such as an operating system and/or NIC driver), platform/server firmware, and/or via a GPU that receives configuration information from the software running on the CPU or the platform/server firmware. For example, in some embodiments the NIC is implemented as a PCIe endpoint and is part of the PCIe hierarchy of the PCIe interconnect structure managed by the CPU. In other embodiments, software on the GPU provides instructions to the GPU to how to configure the NIC.

### Video Encoding and Streaming Primer

Under aspects of the embodiments disclosed herein, techniques are provided for streaming video game image data to end-user devices operated by players (aka player devices) in a manner that reduces latency. Aspects of streaming video game image data when using frame encoding and decoding may employ the same codecs (Coder-Decoders) as used for video streaming. Accordingly, to have a better understanding of how the embodiments may be implemented, a discussion of basic aspects of video compression and decompression techniques is first provided. In addition to the details herein, further details on how video compression and decompression may be implemented are available from a number of on-line sources, including in an EE Times.com article entitled "How video compression works," available at http://www.eetimes.com/document.asp?doc_id=1275437, the source for much of the following discussion.

At a basic level, streaming video content is played-back on a display as a sequence of "frames" or "pictures." Each frame, when rendered, comprises an array of pixels having dimensions corresponding to a playback resolution. For example, full HD (high-definition) video has a resolution of 1920 horizontal pixels by 1080 vertical pixels, which is commonly known as 1080p (progressive) or 1080i (interlaced). In turn, the frames are displayed at a frame rate, under which the frame's data is refreshed (re-rendered, as applicable) at the frame rate. For many years, standard definition (SD) television used a refresh rate of 30i (30 frames per second (fps) interlaced), which corresponded to updating two fields of interlaced video content every 1/30 seconds in an alternating manner. This produced the illusion of the frame rate being 60 frames per second. It is also noted that historically SD content was analog video, which uses raster scanning for display rather than pixels. The resolution of SD video on a digital display is 480 lines, noting that the analog signals used for decades actually had approximately 525 scan lines. As a result, DVD content has historically been encoded at 480i or 480p for the NTSC (National Television System Committee) markets, such as the United States.

Cable and satellite TV providers stream video content over optical and/or wired cable or through the atmosphere (long distance wireless). Terrestrial television broadcasts are likewise sent over the air; historically, these were sent as analog signals, but since approximately 2010 all high-power TV broadcasters have been required to transmit using digital signals exclusively. Digital TV broadcast signals in the US generally include 480i, 480p, 720p 1280x720 pixel resolution), and 1080i.

Blu-ray Disc (BD) video content was introduced in 2003 in Japan and officially released in 2006. Blu-ray Discs support video playback at up to 1080p, which corresponds to 1920x1080 at 60 (59.94) fps. Although BDs support up to 60fps, much of BD content (particularly recent BD content) is actually encoded at 24fps progressive (also known as 1080/24p), which is the frame-rate that has historically been used for film (movies). Conversion to from 24fps to 60fps may typically be done using a 3:2 "pulldown" technique under which frame content is repeated in a 3:2 pattern, which may create various types of video artifacts, particularly when playing back content with a lot of motion. Newer "smart" TV's have a refresh rate of 120Hz or 240Hz, each of which is an even multiple of 24. As a result, these TVs support a 24fps "Movie" or "Cinema" mode under which they digital video content using an HDMI (High Definition Multimedia interface) digital video signal, and the extracted frame content is repeated using a 5:5 or 10:10 pulldown to display the 24fps content at 120fps or 240fps to match the refresh rate of the TVs. More recently, smart TVs from manufacturers such as Sony and Samsung support playback modes under which multiple interpolated frames are created between the actual 24fps frames to create a smoothing effect.

Compliant Blu-ray Disc playback devices are required to support three video encoding standards: H.262/MPEG-2 Part 2, H.264/MPEG-4 AVC, and VC-1. Each of these video encoding standards operates in a similar manner described below, noting there are some variances between these standards.

In addition to video content being encoded on DVDs and Blu-ray Discs, a massive amount of video content is delivered using video streaming techniques. The encoding techniques used for streaming media such as movies and TV shows generally may be identical or similar to that used for BD content. For example, each of Netflix and Amazon Instant Video use VC-1 (in addition to other streaming formats dependent on the playback device capabilities), which was initially developed as a proprietary video format by Microsoft, and was released as a SMPTE (Society of Motion Picture and Television Engineers) video codec standard in 2006. Meanwhile, YouTube uses a mixture of video encoding standards that are generally the same as used to record the uploaded video content, most of which is recorded using consumer-level video recording equipment (e.g., camcorders, mobile phones, and digital cameras), as opposed to professional-level equipment used to record original television content and some resent movies.

To provide an example of how much video content is being streamed, recent measurements indicate that during peak consumption periods Netflix streaming was using one-third or more of the bandwidth of Comcast's cable Internet services. In addition to supporting full HD (1080p) streaming since 2011, Netflix, Amazon, Hulu, and streaming an ever-increasing amount of video content in 4K video (3840x2160), also referred to as UltraHigh Definition or UHD.

The more-advanced Smart-TVs universally support playback of streaming media delivered via an IEEE 802.11-based wireless network (commonly referred to as WiFi^{™}). Moreover, most of the newer BD players support WiFi^{™} streaming of video content, as does every smartphone. In addition, many recent smartphones and tablets support wireless video streaming schemes under which video can be viewed on a Smart TV via playback through the smartphone or table using WiFi^{™} Direct or wireless MHL (Mobile High-definition Link) or similar standards. Moreover, the data service bandwidths now available over LTE (Long-term Extension) and 5^{th} Generation (5G) mobile networks make such services as IPTV (Internet Protocol Television) a viable means for viewing television and other video content via a mobile network.

At a resolution of 1080, each frame comprises approximately 2.1 million pixels. Using only 8-bit pixel encoding would require a data streaming rate of nearly 17 million bits per second (mbps) to support a frame rate of only 1 frame per second if the video content was delivered as raw pixel data. Since this would be impractical, video content is encoded in a highly-compressed format.

Still images, such as viewed using an Internet browser, are typically encoded using JPEG (Joint Photographic Experts Group) or PNG (Portable Network Graphics) encoding. The original JPEG standard defines a "lossy" compression scheme under which the pixels in the decoded image may differ from the original image. In contrast, PNG employs a "lossless" compression scheme. Since lossless video would have been impractical on many levels, the various video compression standards bodies such as the Motion Photographic Expert Group (MPEG) that defined the first MPEG-1 compression standard

(1993) employ lossy compression techniques including still-image encoding of intra-frames ("I-frames") (also known as "key" frames) in combination with motion prediction techniques used to generate other types of frames such as prediction frames ("P-frames") and bi-directional frames ("B-frames").

Since digitized video content is made up of a sequence of frames, video compression algorithms employ concepts and techniques employed in still-image compression. Still-image compression employs a combination of block-encoding and advanced mathematics to substantially reduce the number of bits employed for encoding the image. For example, JPEG divides an image into 8x8 pixel blocks, and transforms each block into a frequency-domain representation using a discrete cosine transformation (DCT). Generally, other block sizes besides 8x8 and algorithms besides DCT may be employed for the block transform operation for other standard-based and propriety compression schemes.

The DCT transform is used to facilitate frequency-based compression techniques. A person's visual perception is more sensitive to the information contained in low frequencies (corresponding to large features in the image) than to the information contained in high frequencies (corresponding to small features). The DCT helps separate the more perceptually-significant information from less-perceptually significant information.

After block transform, the transform coefficients for each block are compressed using quantization and coding. Quantization reduces the precision of the transform coefficients in a biased manner: more bits are used for low-frequency coefficients and fewer bits for high-frequency coefficients. This takes advantage of the fact, as noted above, that human vision is more sensitive to low-frequency information, so the high-frequency information can be more approximate.

Next, the number of bits used to represent the quantized DCT coefficients is reduced by "coding," which takes advantage of some of the statistical properties of the coefficients. After quantization, many of the DCT coefficients-often, the vast majority of the high-frequency coefficients-are zero. A technique called "run-length coding" (RLC) takes advantage of this fact by grouping consecutive zero-valued coefficients (a "run") and encoding the number of coefficients (the "length") instead of encoding the individual zero-valued coefficients.

Run-length coding is typically followed by variable-length coding (VLC). In variable-length coding, commonly occurring symbols (representing quantized DCT coefficients or runs of zero-valued quantized coefficients) are represented using code words that contain only a few bits, while less common symbols are represented with longer code words. By using fewer bits for the most common symbols, VLC reduces the average number of bits required to encode a symbol thereby reducing the number of bits required to encode the entire image.

At this stage, all the foregoing techniques operate on each 8x8 block independently from any other block. Since images typically contain features that are much larger than an 8x8 block, more efficient compression can be achieved by taking into account the similarities between adjacent blocks in the image. To take advantage of such inter-block similarities, a prediction step is often added prior to quantization of the transform coefficients. In this step, codecs attempt to predict the image information within a block using the information from the surrounding blocks. Some codecs (such as MPEG-4) perform this step in the frequency domain, by predicting DCT coefficients. Other codecs (such as H.264/AVC) do this step in the spatial domain, and predict pixels directly. The latter approach is called "intra prediction."

In this operation, the encoder attempts to predict the values of some of the DCT coefficients (if done in the frequency domain) or pixel values (if done in the spatial domain) in each block based on the coefficients or pixels in the surrounding blocks. The encoder then computes the difference between the actual value and the predicted value and encodes the difference rather than the actual value. At the decoder, the coefficients are reconstructed by performing the same prediction and then adding the difference transmitted by the encoder. Because the difference tends to be small compared to the actual coefficient values, this technique reduces the number of bits required to represent the DCT coefficients.

In predicting the DCT coefficient or pixel values of a particular block, the decoder has access only to the values of surrounding blocks that have already been decoded. Therefore, the encoder must predict the DCT coefficients or pixel values of each block based only on the values from previously encoded surrounding blocks. JPEG uses a very rudimentary DCT coefficient prediction scheme, in which only the lowest-frequency coefficient (the "DC coefficient") is predicted using simple differential coding. MPEG-4 video uses a more sophisticated scheme that attempts to predict the first DCT coefficient in each row and each column of the 8x8 block.

In contrast to MPEG-4, in H.264/AVC the prediction is done on pixels directly, and the DCT-like integer transform always processes a residual - either from motion estimation or from intra-prediction. In H.264/AVC, the pixel values are never transformed directly as they are in JPEG or MPEG-4 I-frames. As a result, the decoder has to decode the transform coefficients and perform the inverse transform in order to obtain the residual, which is added to the predicted pixels.

Another widely-used video codec is High Efficiency Video Coding (HEVC), also known as H.265 (used herein) and MPEG-H Part 2. In comparison to H.264/AVC, HEVC offers from 25% to 50% better data compression at the same level of video quality, or substantially improved video quality at the same bit rate. It supports resolutions up to 8192×4320, including 8K UHD, and unlike the primarily 8-bit AVC, HEVC's higher fidelity Main10 profile has been incorporated into nearly all supporting hardware. HEVC uses integer DCT and DST transforms with varied block sizes between 4×4 and 32×32.

Color images are typically represented using several "color planes." For example, an RGB color image contains a red color plane, a green color plane, and a blue color plane. When overlaid and mixed, the three planes make up the full color image. To compress a color image, the still-image compression techniques described earlier can be applied to each color plane in turn.

Imaging and video applications often use a color scheme in which the color planes do not correspond to specific colors. Instead, one color plane contains luminance information (the overall brightness of each pixel in the color image) and two more color planes contain color (chrominance) information that when combined with luminance can be used to derive the specific levels of the red, green, and blue components of each image pixel. Such a color scheme is convenient because the human eye is more sensitive to luminance than to color, so the chrominance planes can often be stored and/or encoded at a lower image resolution than the luminance information. In many video compression algorithms the chrominance planes are encoded with half the horizontal resolution and half the vertical resolution of the luminance plane. Thus, for every 16-pixel by 16-pixel region in the luminance plane, each chrominance plane contains one 8-pixel by 8-pixel block. In typical video compression algorithms, a "macro block" is a 16x16 region in the video frame that contains four 8x8 luminance blocks and the two corresponding 8x8 chrominance blocks.

While video and still-image compression algorithms share many compression techniques, a key difference is how motion is handled. One extreme approach would be to encode each frame using JPEG, or a similar still-image compression algorithm, and then decode the JPEG frames to generate at the player. JPEGs and similar still-image compression algorithms can produce good quality images at compression ratios of about 10:1, while advanced compression algorithms may produce similar quality at compression ratios as high as 30:1. While 10:1 and 30:1 are substantial compression ratios, video compression algorithms can provide good quality video at compression ratios up to approximately 200:1. This is accomplished through use of video-specific compression techniques such as motion estimation and motion compensation in combination with still-image compression techniques.

For each macro block in the current frame, motion estimation attempts to find a region in a previously encoded frame (called a "reference frame") that is a close match. The spatial offset between the current block and selected block from the reference frame is called a "motion vector." The encoder computes the pixel-by-pixel difference between the selected block from the reference frame and the current block and transmits this "prediction error" along with the motion vector. Most video compression standards allow motion-based prediction to be bypassed if the encoder fails to find a good match for the macro block. In this case, the macro block itself is encoded instead of the prediction error.

It is noted that the reference frame isn't always the immediately-preceding frame in the sequence of displayed video frames. Rather, video compression algorithms commonly encode frames in a different order from the order in which they are displayed. The encoder may skip several frames ahead and encode a future video frame, then skip backward and encode the next frame in the display sequence. This is done so that motion estimation can be performed backward in time, using the encoded future frame as a reference frame. Video compression algorithms also commonly allow the use of two reference frames - one previously displayed frame and one previously encoded future frame.

Video compression algorithms periodically encode intra-frames using still-image coding techniques only, without relying on previously encoded frames. If a frame in the compressed bit stream is corrupted by errors (*e.g.,* due to dropped packets or other transport errors), the video decoder can "restart" at the next I-frame, which does not require a reference frame for reconstruction.

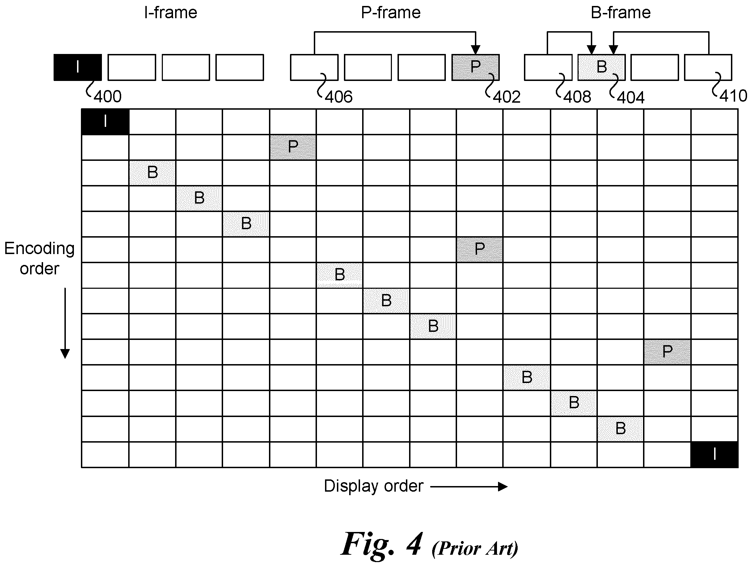

Figure 4 shows an exemplary frame encoding and display scheme consisting of I-frames 400, P-frames 402, and B-frames 404. As discussed above, I-frames are periodically encoded in a manner similar to still images and are not dependent on other frames. P-frames (Predicted-frames) are encoded using only a previously displayed reference frame, as depicted by a previous frame 406. Meanwhile, B-frames (Bi-directional frames) are encoded using both future and previously displayed reference frames, as depicted by a previous frame 408 and a future frame 410.

The lower portion of Figure 4 depicts an exemplary frame encoding sequence (progressing downward) and a corresponding display playback order (progressing toward the right). In this example, each P-frames is followed by three B-frames in the encoding order. Meanwhile, in the display order, each P-frame is displayed after three B-frames, demonstrating that the encoding order and display order are not the same. In addition, it is noted that the occurrence of P-frames and B-frames will generally vary, depending on how much motion is present in the captured video; the use of one P-frame followed by three B-frames herein is for simplicity and ease of understanding how I-frames, P-frames, and B-frames are implemented.

One factor that complicates motion estimation is that the displacement of an object from the reference frame to the current frame may be a non-integer number of pixels. To handle such situations, modern video compression standards allow motion vectors to have non-integer values, resulting, for example, in motion vector resolutions of one-half or one-quarter of a pixel. To support searching for block matches at partial-pixel displacements, the encoder employs interpolation to estimate the reference frame's pixel values at non-integer locations.

Due, in part, to processor limitations, motion estimation algorithms use various methods to select a limited number of promising candidate motion vectors (roughly 10 to 100 vectors in most cases) and evaluate only the 16x16 regions (or up to 32x32 regions for H.265) corresponding to these candidate vectors. One approach is to select the candidate motion vectors in several stages, subsequently resulting in selection of the best motion vector. Another approach analyzes the motion vectors previously selected for surrounding macro blocks in the current and previous frames in an effort to predict the motion in the current macro block. A handful of candidate motion vectors are selected based on this analysis, and only these vectors are evaluated.

By selecting a small number of candidate vectors instead of scanning the search area exhaustively, the computational demand of motion estimation can be reduced considerably-sometimes by over two orders of magnitude. But there is a tradeoff between processing load and image quality or compression efficiency: in general, searching a larger number of candidate motion vectors allows the encoder to find a block in the reference frame that better matches each block in the current frame, thus reducing the prediction error. The lower the predication error, the fewer bits that are needed to encode the image. So increasing the number of candidate vectors allows a reduction in compressed bit rate, at the cost of performing more computations. Or, alternatively, increasing the number of candidate vectors while holding the compressed bit rate constant allows the prediction error to be encoded with higher precision, improving image quality.

Some codecs (including H.264 and H.265) allow a 16x16 macroblock to be subdivided into smaller blocks (e.g., various combinations of 8x8, 4x8, 8x4, and 4x4 blocks) to lower the prediction error. Each of these smaller blocks can have its own motion vector. The motion estimation search for such a scheme begins by finding a good position for the entire 16x16 block (or 32x32 block). If the match is close enough, there's no need to subdivide further. But if the match is poor, then the algorithm starts at the best position found so far, and further subdivides the original block into 8x8 blocks. For each 8x8 block, the algorithm searches for the best position near the position selected by the 16x16 search. Depending on how quickly a good match is found, the algorithm can continue the process using smaller blocks of 8x4, 4x8, *etc.*

During playback, the video decoder performs motion compensation via use of the motion vectors encoded in the compressed bit stream to predict the pixels in each macro block. If the horizontal and vertical components of the motion vector are both integer values, then the predicted macro block is simply a copy of the 16-pixel by 16-pixel region of the reference frame. If either component of the motion vector has a non-integer value, interpolation is used to estimate the image at non-integer pixel locations. Next, the prediction error is decoded and added to the predicted macro block in order to reconstruct the actual macro block pixels. As mentioned earlier, for codecs such as H.264 and H.265, the 16x16 (or up to 32x32) macroblock may be subdivided into smaller sections with independent motion vectors.

Ideally, lossy image and video compression algorithms discard only perceptually insignificant information, so that to the human eye the reconstructed image or video sequence appears identical to the original uncompressed image or video. In practice, however, some artifacts may be visible, particularly in scenes with greater motion, such as when a scene is panned. This can happen due to a poor encoder implementation, video content that is particularly challenging to encode, or a selected bit rate that is too low for the video sequence, resolution, and frame rate. The latter case is particularly common, since many applications trade off video quality for a reduction in storage and/or bandwidth requirements.

Two types of artifacts, "blocking" and "ringing," are common in video compression applications. Blocking artifacts are due to the fact that compression algorithms divide each frame into 8x8 blocks. Each block is reconstructed with some small errors, and the errors at the edges of a block often contrast with the errors at the edges of neighboring blocks, making block boundaries visible. In contrast, ringing artifacts appear as distortions around the edges of image features. Ringing artifacts are due to the encoder discarding too much information in quantizing the high-frequency DCT coefficients.

To reduce blocking and ringing artifacts, video compression applications often employ filters following decompression. These filtering steps are known as "deblocking" and "deringing," respectively. Alternatively, deblocking and/or deringing can be integrated into the video decompression algorithm. This approach, sometimes referred to as "loop filtering," uses the filtered reconstructed frame as the reference frame for decoding future video frames. H.264, for example, includes an "in-loop" deblocking filter, sometimes referred to as the "loop filter."

### End-to-End Image Data Flow Example

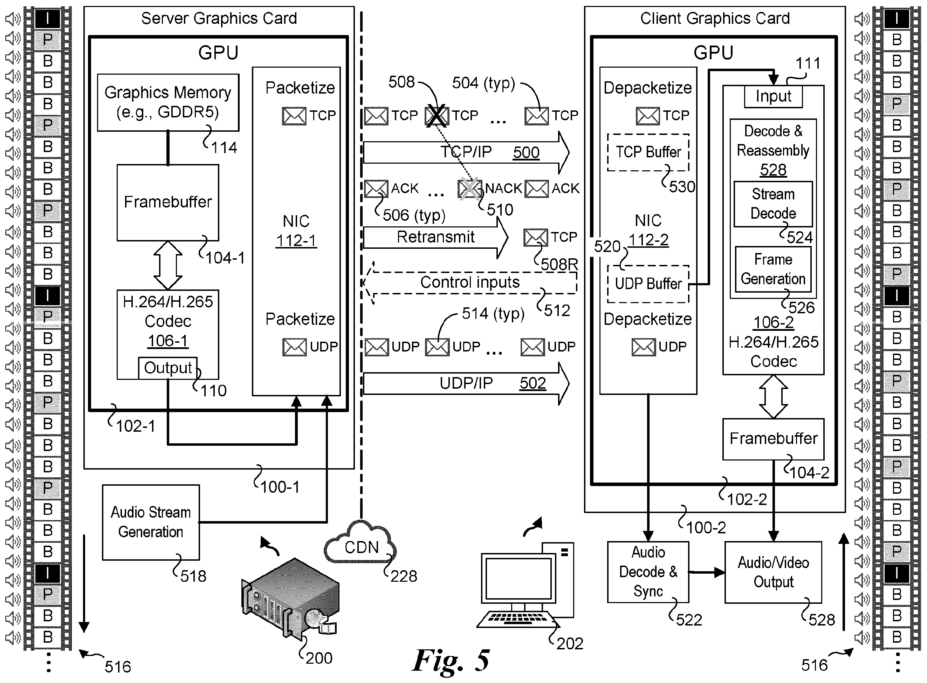

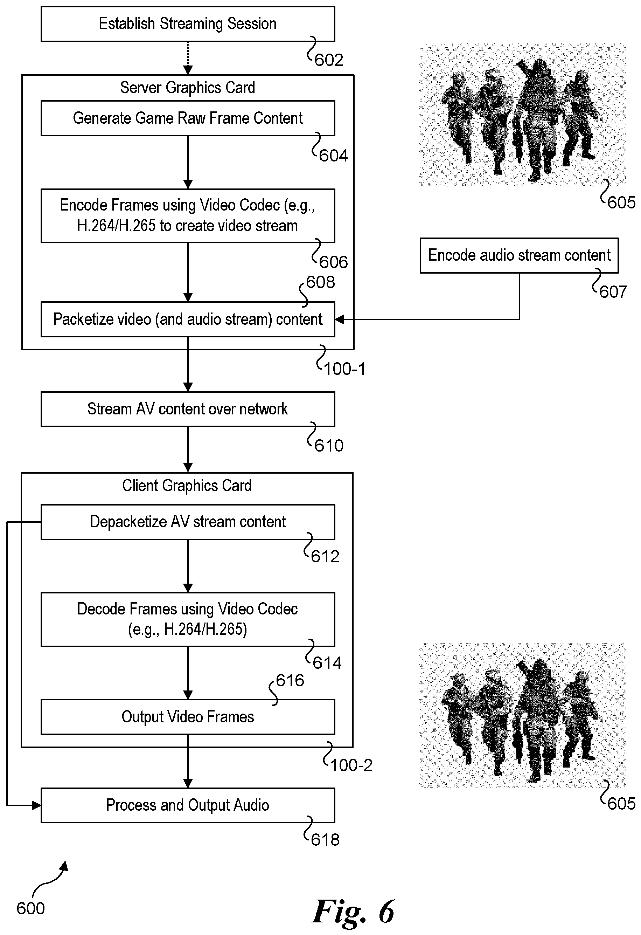

Figure 5 shows an example of an end-to-end image data flow between a game server 200 and a desktop game client 202, according to one embodiment. Associated operations are further depicted in a flowchart 600 shown in Figure 6. Under the example of Figure 5, communication between a server graphics card 100-1 in game server 200 and a client graphics card 100-2 in desktop game client 202 is illustrated. In general, the communications illustrated in Figure 5 may be between any type of device that generates game image content and any type of device that has a client for receiving and processing game image content, such as a cloud gaming server and a gaming device operated by a player. In this example, audio content is depicted as being transferred between server graphics card 100-1 and client graphics card 100-2. In some implementations, the audio content will be transferred via a separate network interface (*e.g.,* separate NIC or network card) on the server and/or the client (not shown). In some implementations employing separate network interfaces, streaming session communication and control communications will be sent via separate communication paths not shown in Figure 5.

As shown in a block 602 in flowchart 600, the process starts by establishing a streaming session between the server and the client. Any type of existing and future streaming session generally may be used, and the teaching and principles disclosed herein are generally agnostic to the particular type of streaming session. The types of streaming protocols that may be used include, but are not limited to traditional streaming protocols such as RTMP (Real-Time Messaging Protocol), RTSP (Real-Time Streaming Protocol)/RTP (Real-Time Transport Protocol) and HTTP-based adaptive protocols such as Apple HLS (HTTP Live Streaming), Low-Latency HLS, MPEG-DASH (Moving Picture Expert Group Dynamic Adaptive Streaming over HTTP), Low-Latency CMAF for DASH (Common Media Application Format for DASH), Microsoft Smooth Streaming, Adobe HDS (HTTP Dynamic Streaming). Newer technologies such as SRT (Secure Reliable Transport) and webRTC (Web Real-Time Communications) may also be used. In one embodiment, and HTTP or HTTPS streaming session is established to support one of the HTTP-based adaptive protocols.

Figure 5 shows two network communications between NIC 112-1 and NIC 112-2: A TCP/IP (Transmission Control Protocol over Internet Protocol) connection 500 and a UDP/IP (Universal Datagram Protocol over IP) stream 502. For simplicity, these are commonly referred to as TCP and UDP. TCP is a reliable connection protocol under which TCP packets 504 are transmitted from a sender to a receiver, where the receiver acknowledges receipts of packets by sending ACKnowledgements (ACKs) 506 indicating frame sequences that have been successfully received. Sometimes TCP packets/frames are dropped or are otherwise received with an error, as depicted by a TCP packet 508. In response to detecting a missing or errant packet, the receiver will send a Negative ACK (NACK) 510 containing information that identifies the missing/errant packet. The missing or errant packet is then retransmitted, as shown by a retransmitted packet 508R. As further shown, TCP/IP connection 500 may be used for receiving game control inputs from desktop game client 202.

HTTP streaming sessions are set up using TCP. However, depending on the streaming protocol, the video and/or audio content may use UDP. UDP is a connectionless non-reliable protocol that is widely used for live streaming. UDP uses a "best efforts" transport, which means packets may be dropped and/or errant packets may be received. In either case, the missing or errant packet is ignored by the receiver. The stream of UDP packets 514 shown in Figure 5 is used to depict packets of video and (optionally) audio content. Some hybrid media transport schemes employ a combination of TCP and UDP transports.

Returning to flowchart 600, at a block a sequence of raw video frames is generated by GPU 102-1 in server graphics card 100-1 via execution of game software on game server 200, such as depicted by a frame 605. As sequences of raw video frames are generated, the content for individual frames is copied to frame buffer 104, with multiple of the individual frames being stored in frame buffer 104 at a given point in time. In a block 606, the frames are encoded using an applicable video codec, such as an H.264 or H.265 codec to create a video stream. This is performed by H.264/H.265 codec 106-1, which reads in raw video frame content from frame buffer 104 and generated an encoded video stream, as depicted by a video stream 516. As will be recognized by those skilled in the art, the video stream that is generated comprises compressed and encoded content corresponding to sequences of I, P, and B frames that are ordered to enable decoding and playback of the raw video frame content at the desktop game client 202, as described in the primer above.

In parallel with generating and encoding game image frames, game audio content is encoded into a streaming format, as depicted in a block 607 and an audio stream generation block 518 in Figure 5. Generally, the audio content will be generated by the game software running on the game server CPU and the encoding of the audio content may be performed using either software or hardware. In this example, the encoding is performed external to server graphics card 100-1. In some embodiments, either GPU 102-1 or other circuitry on server graphics card 100-1 (not shown) may be used to encode audio content.

In a block 608 the video stream content is packetized by NIC 112-1. Optionally, the audio stream may also be packetized by NIC 112-1. Under one approach, the video and audio streams are sent as separate streams (in parallel) and there is information in one of the streams that is used to synchronize the audio and video content via playback facilities on the game client. Under other approaches, the video and audio content are combined and sent as a single stream of packets. Generally, any existing or future video and audio streaming packetizing scheme may be used.

As depicted by a block 610, the AV (audio and video) content is streamed over the network from server graphics card 100-1 to client graphics card 100-2. As depicted in Figure 5, the corresponding content is streamed via UDP packets 514, which are representative of one or more UDP streams used to send AV content.

The receiving side operations are performed by client graphics card 100-2. As the one or more UDP streams are received, the audio and video content is buffered in one or more UDP buffers 520 in NIC 112-2 and subsequently depacketized, as depicted by a block 612 in flowchart 600. In embodiments under which audio processing is not handled by the GPU or client graphics card, the depacketized audio content is separated and forward to the host CPU to perform processing and output of the audio content, as depicted by block 618 in flowchart 600 and by an audio decode and sync block 522 in Figure 5. Optionally, audio processing may be performed by applicable facilities (not shown) on client graphics card 100-2.

In a block 614 the video (game image) frames are decoded using an applicable video codec. In the example of Figure 5 this is performed by H.264/H.265 codec 106-2. Various mechanism may be used to forward the depacketized encoded video content from NIC 112-2 to I/O interface 110 on H.264/H.265 codec 106-2. For example, a work descriptor scheme may be used wherein NIC writes a work descriptor to a memory location on GPU 102-2 and then writes the corresponding "work" (*e.g.*, encoded video data segment(s) to either a location on GPU 102-2 or into graphics memory on client graphics card 102-2 (not shown). Under another embodiment, a "doorbell" scheme may be used whether NIC 112-2 posts a doorbell when it has depacketized encoded video segments available and H.264/H.265 codec 106-2 reads the encoded video segments from NIC 112-2. Other types of queuing mechanisms may also be used. In some embodiments, circular First-In First-Out (FIFO) buffers or queues are used, such as circular FIFOs.

As shown in Figure 5 H.264/H.265 codec 106-2 performs video stream decode processing 524 and frame (re)generation 526 in a decode and reassembly block 528. The regenerated frames may be written to the GPU frame buffer 104-2 and then output to the display for desktop game client 202, as depicted by block 616 and video frame 605 in Figure 6. For example, GPU 102-2 may generate game image frames and output corresponding video signals over an applicable video interface (*e.g.,* HDMI, DisplayPort, USB-C) to be viewed on a monitor or other type of display. As depicted by Audio/Video output block 528, the audio and video content are respectively output to (a) speaker(s) and a display for desktop game client 202.

Generally, when a NIC integrated on a GPU or coupled to the GPU on a client graphics card is used to process TCP traffic, received TCP packets will be buffered in one or more TCP buffers 530. As described an illustrated below, each of NICs 112-1 and 112-2 have facilities for implementing a full network stack in hardware. Generally, received TCP packets will be packetized and forwarded to the host CPU for further processing. Forwarding may be accomplished through conventional means such as DMA (Direct Memory Access) using PCIe Write transactions.

### Tile-based Games

Many popular games employ tiles and associated tilemaps. This may result in performance gain when compared with using video encoding /decoding techniques.

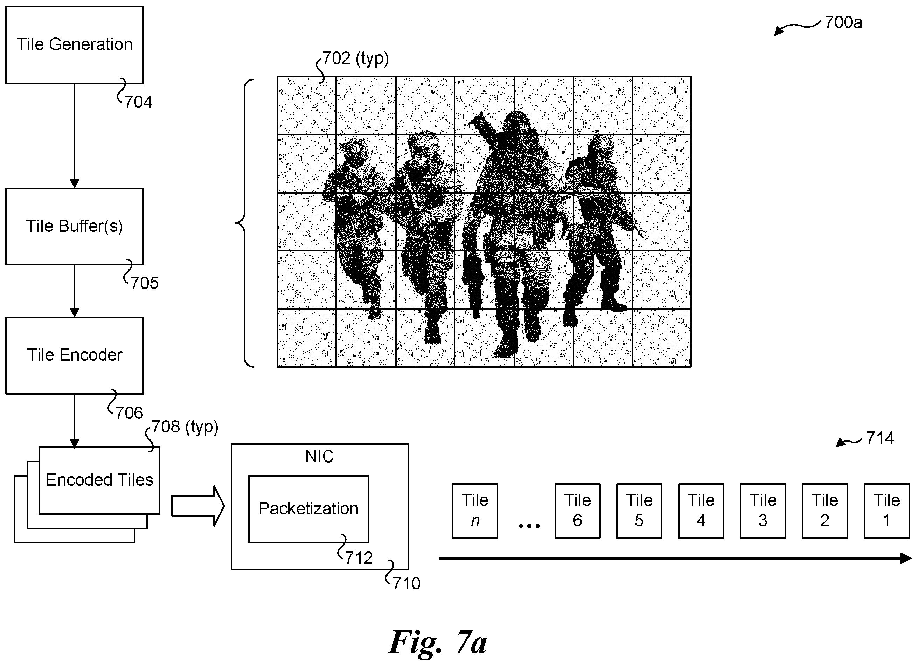

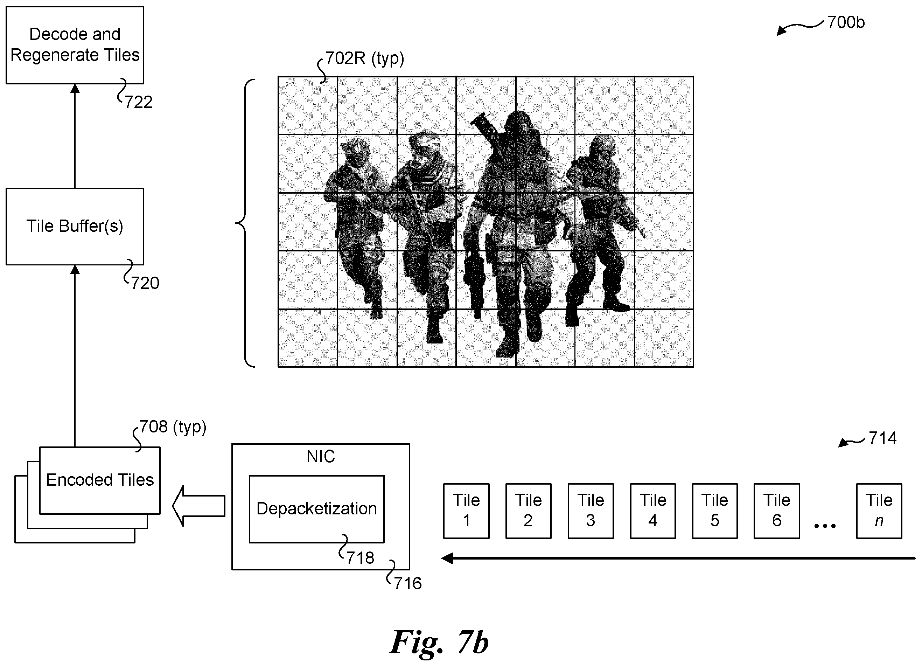

Diagrams 700a and 700b of Figures 7a and 7b respectively illustrate operations performed on a game server and game client for tile-based games, according to one embodiment. As shown in Figure 7a, tiles 702 a full frame image is composed of multiple tiles 702 arranged in an X-Y grid. During game play, the game software executing on the game server generates tiles, as depicted by a tile generation block 704. The tiles are written to one or more tile buffers 705. A tile encoder 706 encodes the tiles using an image compression algorithm to generate encoded tiles 708, followed by the image data in the encoded tiles being packetized by a packetization logic 712 on NIC 710. NIC 710 then transmits a stream of encoded tiles 714 onto the network to be delivered to the game client.

Now referring to diagram 700b of Figure 7b, the game client receives the stream of encoded tiles 714 at NIC 716, which performs depacketization 718 to output encoded tiles 708. The encoded tiles are then written to tile buffers 720 (or otherwise some memory space on the GPU or accessible to the GPU). Decode and regenerate tiles block 722 is then used to read encoded tile content from tile buffers 720, decode the encoded tile content to regenerate the original tiles, which are depicted as regenerated tiles 702R.

Figure 1c shows an embodiment of a graphics card 100c including a GPU 102c configured to support the server-side and client-side operations shown in diagrams 700a and 700b. As depicted by like-numbered components and blocks in Figures 1 and 1c, the configuration of graphics cards 100 and 100c are similar. The difference is that GPU 102c includes a tile encoder and decoder 706 with an I/O interface 111. Tile encoder and decoder is configured to perform the encoding operations of tile encoder 706 in Figure 7a and at least the decode operations for decode and regenerate tiles block 722 in Figure 7b. In one embodiment, the full logic for decode and regenerate tiles block 722 is implemented in tile encoder and decoder 706. Optionally, a portion of the tile regeneration logic and other logic relating to reassembly of game tiles may be implemented in a separate block (not shown).

### Cloud Game Server with Multiple Graphics Cards

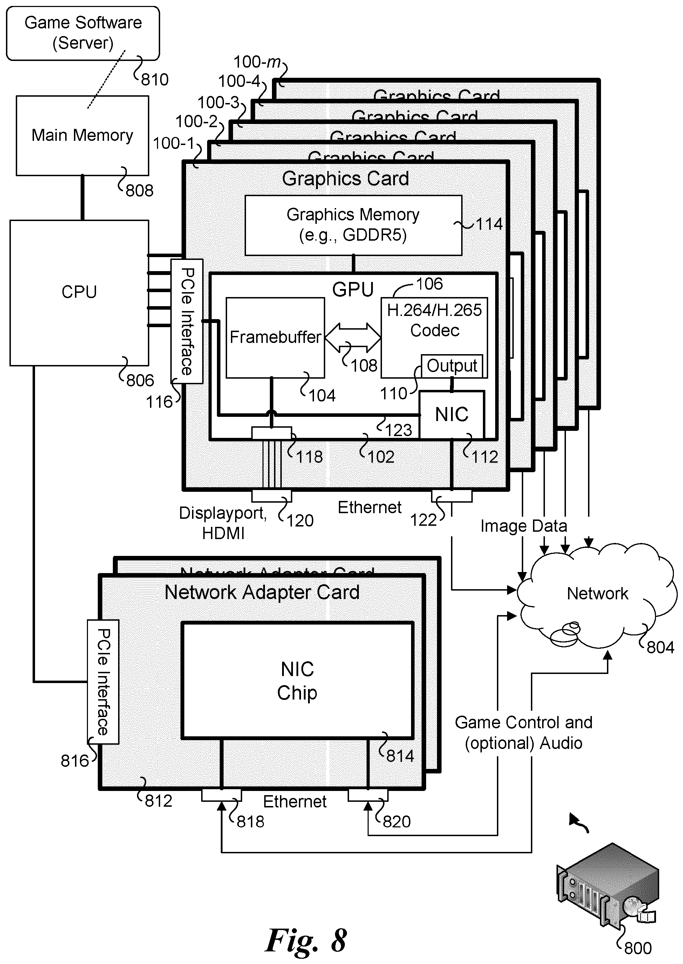

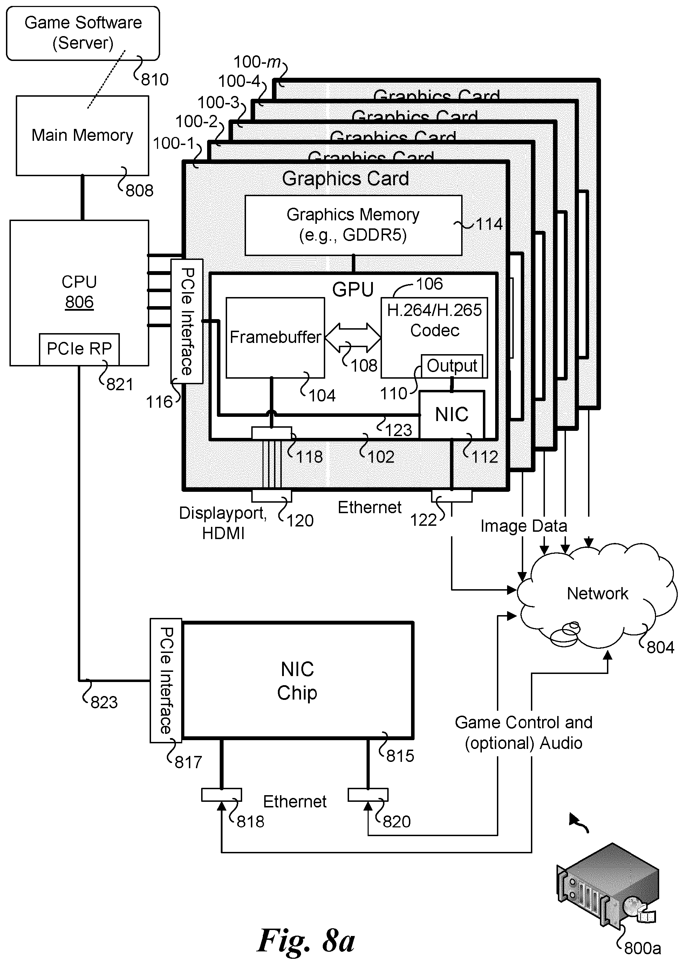

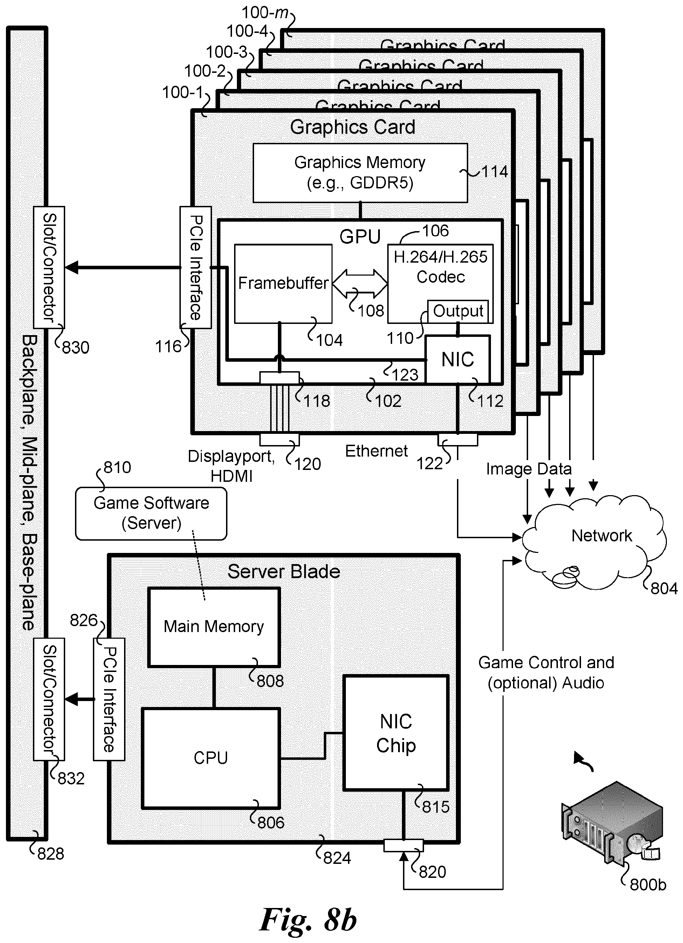

Under one approach, a cloud game server will include multiple graphics cards, such as depicted for a cloud game server 800 in Figure 8. Cloud game server 800 includes *m* graphics cards 100 (as depicted by graphics cards 100-1, 100-2, 100-3, 100-4, 100*-m*)*,* each occupying a respective PCIe slot (*aka* expansion slot) on the server's main board. The server's main board further includes one or more CPUs 806 coupled to main memory 808 in which game software 810 is loaded. Cloud game server 800 further includes one or more network adaptor cards 812 installed in respective PCIe slots, each of which include a NIC chip 814, a PCIe interface 816, and one or more Ethernet ports, such as depicted by Ethernet ports 818 and 820.

Under the embodiment of a cloud game server 800a in Figure 8a, a NIC chip 815 including a PCIe interface 817 is mounted to the server's main board and coupled to CPU 806 via an applicable interconnect structure. For example, CPU 806 may include a PCIe Root Port (RP) 821 to which PCIe interface 817 is coupled via a PCIe link 823.

Under the embodiment of a cloud game server 800b in Figure 8b, CPU 806, main memory 808, and NIC chip 815 are mounted to a main board in a blade server 824 including a PCIe interface 826. Cloud game server 800b includes a backplane, mid-plane or base-plane 828 having multiple expansion slots or connectors, as depicted by slot/connectors 830 and 832. Each of server blade 824 and the *m* graphics cards 100-1, 100-2, 100-3, 100-4, 100-*m* are installed in a respected expansion slot or include a connecter that couples to a mating connector on backplane, mid-plane or base-plane 828.

Cloud game server is configured to scale game hosting capacity by employing graphics cards 100 for generating and streaming game image data while employing one or more network adaptor cards 812 or NICs 815 for handling game control inputs and setting up and managing streaming connections. Thus, the integrated NICs on graphics cards 100 are not burdened with handling I/O traffic relating to real-time control inputs and streaming setup and management traffic; rather, the integrated NICs only have to handle outbound image data traffic. Moreover, since the datapath flows directly from the image data encoder (*e.g.,* H.264/H.265 codec in this example, but may be a tile encoder/decoder in other embodiments), the latency is reduced. In addition, game audio content may be streamed using NICs 815 or network adaptor cards 812. In other embodiments, the audio content is streamed using graphics cards 100, as described above.

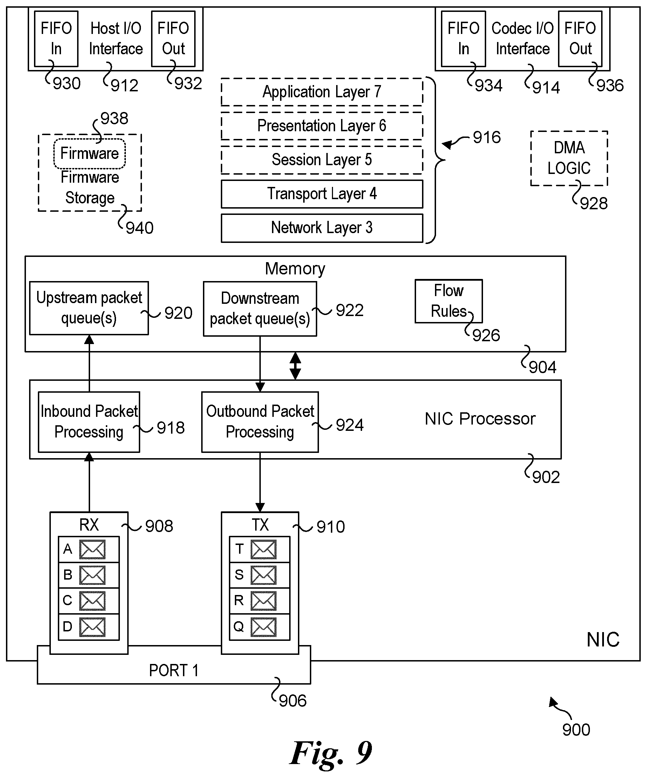

Figure 9 shows block-level components implemented in an integrated NIC 900, according to one embodiment. NIC 900 includes a NIC processor 902 coupled to memory 904, one or more network ports 906 (*e.g.,* Ethernet ports) including a receive (RX) port 908 and a transmit (TX) port 910, a host I/O interface 912, a codec I/O interface 914 and embedded logic for implementing a network stack 916. Network port 906 includes circuitry and logic for implementing the Physical Layer (PHY Layer 1), and Media Access Channel (MAC) (Layer 2) of the Open Systems Interconnection (OSI) model.

RX port 908 and TX port 910 include respective RX and TX buffers in which received packets (*e.g.,* packets A, B, C, D) and to be transmitted packets (*e.g.,* packets Q, R, S, T) are buffered. Received packets are processed by an inbound packet processing block 918 and buffered in an upstream packet queue(s) 920. Outbound packets are queued in downstream packet queue(s) 922 and processed using an outbound packet processing block 924.

Flow rules 926 are stored in memory 904 and are used to determine where a received packet is to be forwarded. For example, inbound video packets will be forwarded to the video codec or tile decoder, while game control and session management packets may be forwarded to a host CPU. NIC 900 may include optional DMA logic 928 to enable the NIC to directly write packet data into main memory (via host I/O interface 912) and/or graphics memory.

Host I/O interface includes an input FIFO queue 930 and an output FIFO queue 932. Similarly, codec I/O interface 914 includes in an input FIFO queue 934 and an output FIFO queue 936. The mating host I/O on the GPU or graphics card and the mating codec I/O interfaces in the video codec include similar input and output FIFO queues (not shown).

Under one embodiment, NIC 900 include embedded logic for implementing Network Layer 3 and Transport Layer 4 of the OSI model. For example, Network Layer 3 will generally be used for the Internet Protocol (IP), while Transport Layer 4 may be used for both TCP and UDP protocols. Under one embodiment, NIC 900 includes further embedded logic for implementing Session Layer 5, Presentation Layer 6, and Application Layer 7. This will enable the NIC to facilitate functionality associated with these layers, such as establish HTTP and HTTPS streaming sessions and/or implement the various media streaming protocols discussed above. In implementations where these operations are handled by the host CPU, the inclusion of Session Layer 5, Presentation Layer 6, and Application Layer 7 is unnecessary.

NIC processor 902 executes firmware instructions 938 to perform the functionality depicted by various blocks in Figure 9. The firmware instructions may be stored in an optional firmware storage unit 940 on NIC 900, or may be stored somewhere external to the NIC. For example, when NIC 900 is an integrated NIC on a GPU employed in a graphics card, the graphics card may include a storage unit or device in which firmware is installed. In other configurations, such as when installed in a game server, all or a portion of the firmware instructions may be loaded from a host during boot operations.

In general, the functionality for the blocks illustrated for NIC 900 may be implemented using some form of embedded logic. Embedded logic generally includes logic implemented in circuitry, such as using an FPGA (Field Programmable Gate Array) or using preprogramed or fixed hardware logic (or a combination of pre-programmed/hard-coded and programmable logic), as well as firmware executing on one or more embedded processors, processing elements, engines, microcontrollers or the like. For illustrative purposes, an example of firmware execution on NIC processor 902 is shown in Figure 9, but this is not meant to be limiting. NIC processor 902 is a form of embedded processor that may include multiple processing elements, such as cores or micro-engines or the like.

NIC 900 may also include embedded "accelerator" hardware or the like that is used to perform packet processing operations, such as flow control, encryption, decryption, *etc.* For example. NIC 900 may include one or more crypto blocks configured to perform encryption and decryption in connection with HTTPS traffic. NIC 900 may also include a hash unit to accelerated hash key matching in connection with packet flow lookups.

In the embodiments shown herein, an H.264/H.265 codec is shown for illustrative purposes and is non-limiting. Generally, any existing and future video codec may be integrated on a GPU and used in a similar manner to that shown. In addition to H.264 and H.265, such video codecs include but are not limited to Versatile Video Coding (VVC)/H.266, AOMedia Video (AV1), VP8 and VP9.

In addition to use with cloud gaming environments, the GPUs and graphics cards described and illustrated herein may be used in other use cases. Non-limiting example use cases include:
- Live game streaming with Twitch. Because the images of the game can be sent out directly from the graphics card, there is lower latency for the game stream.
- Other video streaming tasks like various YouTube live streams may be accelerated. Today, video streams are either encoded on the CPU or on the GPU - depending on what makes more sense for the certain use case. In the case where encoding happens on the GPU, the encoded frames can be directly sent out through the NIC without going through the read back procedures and PC memory.
- Video telephony applications such as Skype and Zoom.
- GPUs are often used as general-purpose accelerators as they are usually much faster for floating point operations compared to CPUs and have better scalability. In the scientific world or area of stock market analysis, calculations often happen on the GPU. If they are needed elsewhere, e.g., for a buy/sell decision in stock market software, the data be sent out to the network faster with the integrated NIC.
- Crypto coin mining for platforms using GPUs as accelerators.

In addition to the use of PCI interfaces, interconnects, and protocols described and illustrated herein, other interconnect structures and protocols may be used. These include but are not limited to Compute Express Link (CXL), Cache Coherent Interconnect for Accelerators (CCIX), Open Coherent Accelerator Processor Interface (OpenCAPI), and Gen-Z interconnects.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

Italicized letters, such as *'m', 'n'*, *etc.,* in in the foregoing detailed description are used to depict an integer number, and the use of a particular letter is not limited to particular embodiments. Moreover, the same letter may be used in separate claims to represent separate integer numbers, or different letters may be used. In addition, use of a particular letter in the detailed description may or may not match the letter used in a claim that pertains to the same subject matter in the detailed description.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (*e.g.,* a computer). For example, a non-transitory computer-readable or machine-readable storage medium includes any mechanism that provides (*i.e.,* stores and/or transmits) information in a form accessible by a computer or computing machine (*e.g.,* computing device, electronic system, *etc*.)*,* such as recordable/non-recordable media (*e.g.,* read only memory (ROM), random access memory (RAM), magnetic disk storage media, optical storage media, flash memory devices, *etc.*). The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

The operations and functions performed by various components described herein may be implemented by software running on a processing element, via embedded hardware or the like, or any combination of hardware and software. Such components may be implemented as software modules, hardware modules, special-purpose hardware (*e.g.*, application specific hardware, ASICs, DSPs, *etc.*), embedded controllers, hardwired circuitry, hardware logic, *etc.* Software content (*e.g.,* data, instructions, configuration information, *etc*.) may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of" can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. An apparatus, comprising:
a Graphics Processing Unit (102), GPU, including,
one or more frame buffers (104);
an integrated encoder/decoder coupled to at least one frame buffer (104) comprising embedded logic for encoding and decoding at least one of image data and video content, wherein the integrated encoder/decoder comprises a video codec (106);
an integrated network interface controller (112), NIC, coupled to the integrated encoder/decoder; and
a video output; and
the apparatus comprises a graphics card (100) further comprising:
graphics memory (114), coupled to the GPU (102) or integrated on the GPU (102);
a network port, coupled to the integrated NIC (112);
an Input/Output interface (110), coupled to the GPU (102); and
a video port coupled to the video output on the GPU (102);
wherein the graphics card (100) is configured to:
receive a stream of packets comprising streaming media content from a network coupled to the network port;
depacketize, using the integrated NIC (112), the stream of packets to extract encoded video content;
one of,
a) write depacketized encoded video content to a buffer accessible to the video codec (106); or
b) read, via the video codec (106), depacketized encoded video content buffered on the integrated NIC (112);
decode, using the video codec (106), the encoded video content to regenerate video game frame content;
buffer the regenerated video game frame content in at least one frame buffer (104); and output display content comprising video game frames via the video port.

2. The apparatus of claim 1, wherein the apparatus comprises a graphics card (100) having an input/output interface (110), I/O interface, wherein the integrated NIC (112) includes an interface coupled to the I/O interface (110) on the graphics card (100), and wherein the NIC (112) is configured to receive data to be transmitted over a network from the I/O interface (110) and forward data received from a network to the I/O interface (110).

3. The apparatus of claim 1 or 2, wherein the GPU (102) is configured to:
generate video game frame content and buffer the video game frame content in the one or more frame buffers (104);
encode the video game frame content using the video codec (106) to generate encoded video game content; and
packetize, using the integrated NIC (112), the encoded video content to generate a stream of packets and transmit the stream of packets outbound to a network.

4. A method implemented on a graphics card (100) including a Graphics Processing Unit (102), GPU, with an integrated Network Interface Controller (112), NIC, comprising:
generating video frame content and buffering the video frame content in one or more frame buffers (104) on the GPU (102);
one of,
encoding the video frame content using a video codec (106) integrated on the GPU (102) to generate encoded video content; and
packetizing, using the integrated NIC (112), the encoded video content to generate a stream of packets and transmit the stream of packets outbound to a network coupled operatively coupled to an output port on the integrated NIC (112);
or
encoding tiles of video frame content using an image tile encoder integrated on the GPU (102) to generate encoded video tiles; and
packetizing, using the integrated NIC (112), the encoded video tiles to generate a stream of packets and transmit the stream of packets outbound to a network coupled operatively coupled to an output port on the integrated NIC (112),
wherein the graphics card (100) is installed in a host and communicated with the host via an Input/Output interface (110) on the graphics card (100) and the video frame content is video game frame content, further comprising:
receiving, from the network, video control input data;
detecting, via the integrated NIC (112), that the video control input data is to be forwarded to the host; and
forwarding the video control input data to the host via an interconnect coupled between the integrated NIC (112) and the I/O interface (110) of the graphics card (100).

5. The method of claim 4, further comprising:
receiving, at an Input/Output interface (110), I/O interface, of the graphics card (100), encoded audio content;
forwarding the encoded audio content via an interconnect on the GPU (102) coupling the I/O interface (110) and the integrated NIC (112); and
packetizing, using the integrated NIC (112), the encoded audio content to generate a stream of audio packets and transmit the stream of audio packets outbound to the network via the output port on the integrated NIC (112).

6. The method of claim 4 or 5, further comprising:
establishing a streaming media session between the graphics card (100) and a client device; and
using the streaming media session to transfer the stream of packets to the client device using at least one protocol associated with the streaming media session.

7. The method of any of claims 4-6, wherein the video frame content is video game frame content, further comprising:
receiving, at an Input/Output interface (110) of the graphics card (100), game control data;
forwarding the game control data via an interconnect on the GPU (102) coupling the I/O interface (110) and the integrated NIC (112) and forwarding the game control data to a game client device using a reliable transport protocol.

8. A cloud game server (800), comprising:
a first board having a plurality of expansion slots or connectors;
a central processing unit (806), CPU, mounted to the first board or to a second board installed in an expansion slot or coupled to a mating connector on the first board;
main memory (808), comprising one or more memory devices communicatively coupled to the CPU (806);
a) one or more network adapter cards (812) installed in a respective expansion slot;
or
b) one or more Network Interface Controller, NIC, chips, mounted to the first or second board; and
a plurality of graphics cards (100) installed in respective expansion slots or coupled to respective mating connectors on the first board, each graphics card (100) comprising,
a Graphics Processing Unit (102), GPU, including, one or more frame buffers (104);
an integrated encoder/decoder coupled to at least one frame buffer (104) comprising embedded logic for encoding and decoding at least one of image data and video content; and
an integrated network interface controller (112), NIC, coupled to the integrated encoder/decoder;
graphics memory (114), coupled to the GPU (102) or integrated on the GPU (102);
at least one network port, coupled to the integrated NIC (112); and
an Input/Output interface (110), I/O interface, coupled to the GPU (102),
wherein the integrated encoder/decoder for at least one graphics card (100) comprises a video codec (106), and wherein the GPU (102) on the at least one graphics card (100) is configured to:
generate video game frame content and buffer the video game frame content in one or more frame buffers (104) on the GPU (102);
encode the video game frame content using the video codec (106) to generate encoded video game content, or encode tiles of video game frame content using the image tile encoder to generate encoded video game tiles;
packetize, using the integrated NIC (112) on the GPU (102), the encoded video content to generate a stream of packets and transmit the stream of packets outbound to a network coupled to a network port on the graphics card (100); and
receive, at the Input/Output interface (110) of the graphics card (100), game control data; and
forward the game control data via an interconnect on the GPU (102) coupling the I/O interface (110) and the integrated NIC (112) and forward the game control data to a game client device using a reliable transport protocol.

9. The cloud game server (800) of claim 8, further comprising game software residing in at least one of main memory and a storage device in the cloud game server (800), wherein execution of the game software enables the cloud game server (800) to:
establish, using network communications employing at least one network adapter card or NIC (112), streaming media sessions with a plurality of game client devices coupled to the network; and
using the plurality of streaming media sessions to transfer the streams of packets to the plurality of game client devices using the plurality of graphics cards (100).

10. The cloud game server (800) of claim 9, wherein the cloud game server (800) is further configured to generate audio content for instances of games being hosted on the cloud game server (800) and stream the audio content to the plurality of game client devices.

## Patentansprüche

1. Einrichtung, die Folgendes umfasst:
eine Grafikverarbeitungseinheit (102), GPU, die Folgendes beinhaltet:
einen oder mehrere Bildspeicher (104);
einen integrierten Codierer/Decodierer, der mit mindestens einem Bildspeicher (104) gekoppelt ist, umfassend eingebettete Logik zum Codieren und Decodieren von Bilddaten und/oder Videoinhalten, wobei der integrierte Codierer/Decodierer einen Videocodec (106) umfasst;
eine integrierte Netzwerkschnittstellensteuerung (112), NIC, die mit dem integrierten Codierer/Decodierer gekoppelt ist; und
einen Videoausgang; und
die Einrichtung umfasst eine Grafikkarte (100), die ferner Folgendes umfasst:
einen Grafikspeicher (114), der mit der GPU (102) gekoppelt oder auf der GPU (102) integriert ist;
einen Netzwerkanschluss, der mit der integrierten NIC (112) gekoppelt ist;
eine Eingabe/Ausgabe-Schnittstelle (110), die mit der GPU (102) gekoppelt ist; und
einen Videoanschluss, der mit dem Videoausgang auf der GPU (102) gekoppelt ist;
wobei die Grafikkarte (100) zu Folgendem ausgelegt ist:
Empfangen eines Stroms von Paketen, die Streaming-Medieninhalte umfassen, von einem mit dem Netzwerkanschluss gekoppelten Netzwerk;
Entpacken, unter Verwendung der integrierten NIC (112), des Stroms von Paketen, um codierte Videoinhalte zu extrahieren;
eines von
a) Schreiben von entpackten codierten Videoinhalten in einen Puffer, auf den der Videocodec (106) zugreifen kann; oder
b) Lesen, über den Videocodec (106), von entpackten codierten Videoinhalten, die auf der integrierten NIC (112) zwischengespeichert werden;
Decodieren, unter Verwendung des Videocodecs (106), der codierten Videoinhalte, um Videospiel-Einzelbildinhalte wiederherzustellen;
Zwischenspeichern der wiederhergestellten Videospiel-Einzelbildinhalte in mindestens einem Bildspeicher (104); und
Ausgeben von Anzeigeinhalten, die Videospiel-Einzelbilder umfassen, über den Videoanschluss.

2. Einrichtung nach Anspruch 1, wobei die Einrichtung eine Grafikkarte (100) mit einer Eingabe/Ausgabe-Schnittstelle (110), E/A-Schnittstelle, umfasst, wobei die integrierte NIC (112) eine Schnittstelle beinhaltet, die mit der E/A-Schnittstelle (110) auf der Grafikkarte (100) gekoppelt ist, und wobei die NIC (112) dazu ausgelegt ist, über ein Netzwerk zu übertragende Daten von der E/A-Schnittstelle (110) zu empfangen und von einem Netzwerk empfangene Daten an die E/A-Schnittstelle (110) weiterzuleiten.

3. Einrichtung nach Anspruch 1 oder 2, wobei die GPU (102) zu Folgendem ausgelegt ist:
Erzeugen von Videospiel-Einzelbildinhalten und Zwischenspeichern der Videospiel-Einzelbildinhalte in dem einen oder den mehreren Bildspeichern (104);
Codieren der Videospiel-Einzelbildinhalte unter Verwendung des Videocodecs (106), um codierte Videospielinhalte zu erzeugen; und
Paketieren, unter Verwendung der integrierten NIC (112), der codierten Videoinhalte, um einen Strom von Paketen zu erzeugen und den Strom von Paketen nach außen an ein Netzwerk zu übertragen.

4. Verfahren, das auf einer Grafikkarte (100) implementiert wird, die eine Grafikverarbeitungseinheit (102), GPU, mit einer integrierten Netzwerkschnittstellensteuerung (112), NIC, beinhaltet, umfassend:
Erzeugen von Videoeinzelbildinhalten und Zwischenspeichern der Videoeinzelbildinhalte in einem oder mehreren Bildspeichern (104) auf der GPU (102);
eines von Codieren der Videobildinhalte unter Verwendung eines Videocodecs (106), der in die GPU (102) integriert ist, um codierte Videoinhalte zu erzeugen; und
Paketieren, unter Verwendung der integrierten NIC (112), der codierten Videoinhalte, um einen Strom von Paketen zu erzeugen und den Strom von Paketen nach außen an ein Netzwerk zu übertragen, das operativ mit einem Ausgangsanschluss an der integrierten NIC (112) gekoppelt ist;
oder
Codieren von Kacheln von Videoeinzelbildinhalten unter Verwendung eines Bildkachelcodierers, der in der GPU (102) integriert ist, um codierte Videokacheln zu erzeugen; und
Paketieren, unter Verwendung der integrierten NIC (112), der codierten Videokacheln, um einen Strom von Paketen zu erzeugen und den Strom von Paketen nach außen an ein Netzwerk zu übertragen, das operativ mit einem Ausgangsanschluss an der integrierten NIC (112) gekoppelt ist,
wobei die Grafikkarte (100) in einem Host installiert ist und mit dem Host über eine Eingabe/Ausgabe-Schnittstelle (110) auf der Grafikkarte (100) kommuniziert und die Videoeinzelbildinhalte Videospiel-Einzelbildinhalte sind, ferner umfassend:
Empfangen, von dem Netzwerk, von Videosteuereingabedaten;
Detektieren, über die integrierte NIC (112), dass die Videosteuereingabedaten an den Host weiterzuleiten sind; und
Weiterleiten der Videosteuereingabedaten an den Host über eine Zwischenverbindung, die zwischen der integrierten NIC (112) und der E/A-Schnittstelle (110) der Grafikkarte (100) gekoppelt ist.

5. Verfahren nach Anspruch 4, das ferner Folgendes umfasst:
Empfangen, an einer Eingabe/Ausgabe-Schnittstelle (110), E/A-Schnittstelle, der Grafikkarte (100), von codierten Audioinhalten;
Weiterleiten der codierten Audioinhalte über eine Zwischenverbindung auf der GPU (102), die die E/A-Schnittstelle (110) und die integrierte NIC (112) koppelt; und
Paketieren, unter Verwendung der integrierten NIC (112), der codierten Audioinhalte, um einen Strom von Audiopaketen zu erzeugen und den Strom von Audiopaketen über den Ausgangsanschluss an der integrierten NIC (112) nach außen an das Netzwerk zu übertragen.

6. Verfahren nach Anspruch 4 oder 5, das ferner Folgendes umfasst:
Einrichten einer Streaming-Mediensitzung zwischen der Grafikkarte (100) und einer Client-Vorrichtung; und
Verwenden der Streaming-Mediensitzung zum Übertragen des Stroms von Paketen an die Client-Vorrichtung unter Verwendung mindestens eines mit der Streaming-Mediensitzung assoziierten Protokolls.

7. Verfahren nach einem der Ansprüche 4-6, wobei die Videoeinzelbildinhalte Videospiel-Einzelbildinhalte sind, ferner umfassend:
Empfangen, an einer Eingabe/Ausgabe-Schnittstelle (110) der Grafikkarte (100), von Spielsteuerdaten;
Weiterleiten der Spielsteuerdaten über eine Zwischenverbindung auf der GPU (102), die die E/A-Schnittstelle (110) und die integrierte NIC (112) koppelt, und Weiterleiten der Spielsteuerdaten an eine Spiel-Client-Vorrichtung unter Verwendung eines zuverlässigen Transportprotokolls.

8. Cloud-Spieleserver (800), der Folgendes umfasst:
eine erste Platine mit mehreren Erweiterungssteckplätzen oder Verbindern;
eine Zentralverarbeitungseinheit (806), CPU, die an der ersten Platine oder an einer zweiten Platine, die in einem Erweiterungssteckplatz installiert ist oder mit einem Gegenverbinder auf der ersten Platine gekoppelt ist, montiert ist;
einen Hauptspeicher (808), der eine oder mehrere Speichervorrichtungen umfasst, die kommunikativ mit der CPU (806) gekoppelt sind;
a) eine oder mehrere Netzwerkadapterkarten (812), die in einem jeweiligen Erweiterungssteckplatz installiert sind; oder
b) einen oder mehrere Netzwerkschnittstellensteuerungs- bzw. NIC-Chips, die an der ersten oder der zweiten Platine montiert sind; und
mehrere Grafikkarten (100), die in jeweiligen Erweiterungssteckplätzen installiert sind oder mit jeweiligen Gegenverbindern auf der ersten Platine gekoppelt sind, wobei jede Grafikkarte (100) Folgendes umfasst:
eine Grafikverarbeitungseinheit (102), GPU, die einen oder mehrere Bildspeicher (104) beinhaltet;
einen integrierten Codierer/Decodierer, der mit mindestens einem Bildspeicher (104) gekoppelt ist, umfassend eingebettete Logik zum Codieren und Decodieren von Bilddaten und/oder Videoinhalten; und
eine integrierte Netzwerkschnittstellensteuerung (112), NIC, die mit dem integrierten Codierer/Decodierer gekoppelt ist;
einen Grafikspeicher (114), der mit der GPU (102) gekoppelt oder auf der GPU (102) integriert ist;
mindestens einen Netzwerkanschluss, der mit der integrierten NIC (112) gekoppelt ist; und
eine Eingabe/Ausgabe-Schnittstelle (110), E/A-Schnittstelle, die mit der GPU (102) gekoppelt ist,
wobei der integrierte Codierer/Decodierer für mindestens eine Grafikkarte (100) einen Videocodec (106) umfasst und wobei die GPU (102) auf der mindestens einen Grafikkarte (100) zu Folgendem ausgelegt ist:
Erzeugen von Videospiel-Einzelbildinhalten und Zwischenspeichern der Videospiel-Einzelbildinhalte in einem oder mehreren Bildspeichern (104) auf der GPU (102);
Codieren der Videospiel-Einzelbildinhalte unter Verwendung des Videocodecs (106), um codierte Videospielinhalte zu erzeugen, oder Codieren von Kacheln von Videospielrahmeninhalten unter Verwendung des Bildkachelcodierers, um codierte Videospielkacheln zu erzeugen;
Paketieren, unter Verwendung der integrierten NIC (112) auf der GPU (102), der codierten Videoinhalte, um einen Strom von Paketen zu erzeugen und den Strom von Paketen nach außen an ein Netzwerk zu übertragen, das mit einem Netzwerkanschluss auf der Grafikkarte (100) gekoppelt ist; und
Empfangen, an der Eingabe/Ausgabe-Schnittstelle (110) der Grafikkarte (100), von Spielsteuerdaten; und
Weiterleiten der Spielsteuerdaten über eine Zwischenverbindung auf der GPU (102), die die E/A-Schnittstelle (110) und die integrierte NIC (112) koppelt, und Weiterleiten der Spielsteuerdaten an eine Spiel-Client-Vorrichtung unter Verwendung eines zuverlässigen Transportprotokolls.

9. Cloud-Spieleserver (800) nach Anspruch 8, der ferner Spielsoftware umfasst, die sich in einem Hauptspeicher und/oder einer Speicherungsvorrichtung in dem Cloud-Spieleserver (800) befindet, wobei die Ausführung der Spielsoftware ermöglicht, dass der Cloud-Spieleserver (800) Folgendes durchführt:
Einrichten, unter Verwendung von Netzwerkkommunikationen, bei denen mindestens eine Netzwerkadapterkarte oder NIC (112) eingesetzt wird, von Streaming-Mediensitzungen mit mehreren Spiel-Client-Vorrichtungen, die mit dem Netzwerk gekoppelt sind; und
Verwenden der mehreren Streaming-Mediensitzungen zum Übertragen der Ströme von Paketen an die mehreren Spiel-Client-Vorrichtungen unter Verwendung der mehreren Grafikkarten (100).

10. Cloud-Spieleserver (800) nach Anspruch 9, wobei der Cloud-Spieleserver (800) ferner dazu ausgelegt ist, Audioinhalte für Instanzen von Spielen zu erzeugen, die auf dem Cloud-Spieleserver (800) gehostet werden, und die Audioinhalte an die mehreren Spiel-Client-Vorrichtungen zu streamen.

## Revendications

1. Appareil, comprenant :
une unité de traitement graphique, GPU, (102), incluant :
une ou plusieurs mémoires tampons de trame (104) ;
un codeur/décodeur intégré couplé à au moins une mémoire tampon de trame (104) comprenant une logique intégrée pour coder et décoder des données d'image et/ou un contenu vidéo, dans lequel le codeur/décodeur intégré comprend un codec vidéo (106) ;
un contrôleur d'interface réseau, NIC, intégré (112),
couplé au codeur/décodeur intégré ; et
une sortie vidéo ; et
l'appareil comprend une carte graphique (100) comprenant en outre :
une mémoire graphique (114), couplée à la GPU (102) ou intégrée sur la GPU (102) ;
un port réseau, couplé au NIC intégré (112) ;
une interface d'entrée/sortie (110), couplée à la GPU (102) ; et
un port vidéo couplé à la sortie vidéo sur la GPU (102) ;
dans lequel la carte graphique (100) est configurée pour :
recevoir un flux de paquets comprenant un contenu multimédia en continu en provenance d'un réseau couplé au port réseau ;
dépaqueter, à l'aide du NIC intégré (112), le flux de paquets pour extraire du contenu vidéo codé ;
l'un parmi,
a) écrire un contenu vidéo codé dépaqueté dans une mémoire tampon accessible au codec vidéo (106) ; ou
b) lire, par le biais du codec vidéo (106), un contenu vidéo codé dépaqueté mis en mémoire tampon sur le NIC intégré (112) ;
décoder, à l'aide du codec vidéo (106), le contenu vidéo codé pour régénérer le contenu de la trame de jeu vidéo ;
mettre en mémoire tampon le contenu de trame de jeu vidéo régénéré dans au moins une mémoire tampon de trame (104) ; et
sortir le contenu d'affichage comprenant des trames de jeu vidéo par le biais du port vidéo.

2. Appareil selon la revendication 1, l'appareil comprenant une carte graphique (100) ayant une interface d'entrée/sortie (110), interface E/S, dans lequel le NIC intégré (112) comporte une interface couplée à l'interface E/S (110) sur la carte graphique (100), et dans lequel le NIC (112) est configuré pour recevoir des données à transmettre sur un réseau en provenance de l'interface E/S (110) et transférer des données reçues d'un réseau à l'interface E/S (110).

3. Appareil selon la revendication 1 ou 2, dans lequel la GPU (102) est configurée pour :
générer un contenu de trame de jeu vidéo et mettre en mémoire tampon le contenu de trame de jeu vidéo dans la ou les mémoires tampons de trame (104) ;
coder le contenu de la trame de jeu vidéo à l'aide du codec vidéo (106) pour générer un contenu de jeu vidéo codé ; et
mettre en paquets, à l'aide du NIC intégré (112), le contenu vidéo codé pour générer un flux de paquets et transmettre le flux de paquets sortant à un réseau.

4. Procédé mis en œuvre sur une carte graphique (100) comportant une unité de traitement graphique, GPU, (102), avec un contrôleur d'interface réseau, NIC, intégré (112), comprenant :
la génération d'un contenu de trame de vidéo et la mise en mémoire tampon du contenu de trame vidéo dans la ou les mémoires tampons de trame (104) sur la GPU (102) ;
l'un parmi,
le codage du contenu de la trame vidéo au moyen d'un codec vidéo (106) intégré à la GPU (102) pour générer un contenu vidéo codé ; et
la mise en paquets, à l'aide du NIC intégré (112), du contenu vidéo codé pour générer un flux de paquets et transmettre le flux de paquets sortant à un réseau couplé fonctionnellement à un port de sortie du NIC intégré (112) ;
ou
le codage de tuiles du contenu de la trame vidéo au moyen d'un codeur de tuiles d'image intégré à la GPU (102) pour générer des tuiles vidéo codées ; et
la mise en paquets, à l'aide du NIC intégré (112), des tuiles vidéo codées pour générer un flux de paquets et transmettre le flux de paquets sortant à un réseau couplé fonctionnellement à un port de sortie du NIC intégré (112),
dans lequel la carte graphique (100) est installée dans un hôte et en communication avec l'hôte par le biais d'une interface d'entrée/sortie (110) sur la carte graphique (100) et le contenu de la trame vidéo est un contenu de trame de jeu vidéo, comprenant en outre :
la réception, en provenance du réseau, de données d'entrée de commande vidéo ;
la détection, par le biais du NIC intégré (112), que les données d'entrée de commande vidéo doivent être transférées à l'hôte ; et
le transfert des données d'entrée de commande vidéo à l'hôte par le biais d'une interconnexion couplée entre le NIC intégré (112) et l'interface E/S (110) de la carte graphique (100).

5. Procédé selon la revendication 4, comprenant en outre :
la réception, au niveau d'une interface d'entrée/sortie (110), interface E/S, de la carte graphique (100), d'un contenu audio codé ;
le transfert du contenu audio codé par le biais d'une interconnexion sur la GPU (102) couplant l'interface E/S (110) et le NIC intégré (112) ; et
la mise en paquets, à l'aide du NIC intégré (112), du contenu audio codé pour générer un flux de paquets audio et transmettre le flux de paquets audio sortant au réseau par le biais du port de sortie sur le NIC intégré (112).

6. Procédé selon la revendication 4 ou 5, comprenant en outre :
l'établissement d'une session multimédia en continu entre la carte graphique (100) et un dispositif client ; et
l'utilisation de la session multimédia en continu pour transférer le flux de paquets au dispositif client au moyen d'au moins un protocole associé à la session multimédia en continu.

7. Procédé selon l'une quelconque des revendications 4 à 6, dans lequel le contenu de trame vidéo est un contenu de trame de jeu vidéo, comprenant en outre :
la réception, au niveau d'une interface d'entrée/sortie (110) de la carte graphique (100), de données de commande de jeu ;
le transfert des données de commande de jeu par le biais d'une interconnexion sur la GPU (102) couplant l'interface E/S (110) et le NIC intégré (112) et le transfert des données de commande de jeu à un dispositif client de jeu à l'aide d'un protocole de transport fiable.

8. Serveur de jeux en nuage (800), comprenant :
une première carte ayant une pluralité de fentes d'extension ou connecteurs ;
une unité centrale (806), UC, montée sur la première carte ou sur une seconde carte installée dans une fente d'extension ou couplée à un connecteur d'accouplement sur la première carte ;
une mémoire principale (808), comprenant un ou plusieurs dispositifs de mémoire couplés en communication avec l'UC (806) ;
a) une ou plusieurs cartes d'adaptateur réseau (812) installées dans une fente d'extension respective ; ou
b) une ou plusieurs puces de contrôleur d'interface réseau, NIC, montées sur la première ou la seconde carte ; et
une pluralité de cartes graphiques (100) installées dans des fentes d'extension respectives ou couplées à des connecteurs correspondants respectifs sur la première carte, chaque carte graphique (100) comprenant,
une unité de traitement graphique, GPU, (102), comportant une ou plusieurs mémoires tampons de trame (104) ;
un codeur/décodeur intégré couplé à au moins une mémoire tampon de trame (104) comprenant une logique intégrée pour coder et décoder des données d'image et/ou un contenu vidéo ; et
un contrôleur d'interface réseau, NIC, intégré (112), couplé au codeur/décodeur intégré ;
une mémoire graphique (114), couplée à la GPU (102) ou intégrée sur la GPU (102) ;
au moins un port réseau, couplé au NIC intégré (112) ; et
une interface d'entrée/sortie (110), interface E/S, couplée à la GPU (102),
dans lequel le codeur/décodeur intégré pour au moins une carte graphique (100) comprend un codec vidéo (106), et
dans lequel la GPU (102) sur l'au moins une carte graphique (100) est configurée pour :
générer un contenu de trame de jeu vidéo et la mise en mémoire tampon du contenu de trame de jeu vidéo dans la ou les mémoires tampons de trame (104) sur la GPU (102) ;
coder le contenu de trames de jeu vidéo au moyen du codec vidéo (106) pour générer un contenu de jeu vidéo codé, ou coder des tuiles de contenu de trames de jeu vidéo au moyen du codeur de tuiles d'image pour générer des tuiles de jeu vidéo codées ;
mettre en paquets, à l'aide du NIC intégré (112) sur la GPU (102), le contenu vidéo codé pour générer un flux de paquets et transmettre le flux de paquets sortant à un réseau couplé fonctionnellement à un port de sortie sur la carte graphique (100) ; et
recevoir, au niveau de l'interface d'entrée/sortie (110) de la carte graphique (100), des données de commande de jeu ; et
transférer des données de commande de jeu par le biais d'une interconnexion sur la GPU (102) couplant l'interface E/S (110) et le NIC intégré (112) et transférer les données de commande de jeu à un dispositif client de jeu à l'aide d'un protocole de transport fiable.

9. Serveur de jeux en nuage (800) selon la revendication 8, comprenant en outre un logiciel de jeu résidant dans au moins l'une d'une mémoire principale et d'un dispositif de stockage dans le serveur de jeux en nuage (800), dans lequel l'exécution du logiciel de jeu permet au serveur de jeux en nuage (800) de :
établir, à l'aide de communications réseau utilisant au moins une carte d'adaptateur réseau ou NIC (112), des sessions multimédias en continu avec une pluralité de dispositifs clients de jeu couplés au réseau ; et
utiliser la pluralité de sessions multimédia en continu pour transférer les flux de paquets vers la pluralité de dispositifs clients de jeu au moyen de la pluralité de cartes graphiques (100).

10. Serveur de jeux en nuage (800) selon la revendication 9, le serveur de jeux en nuage (800) étant en outre configuré pour générer un contenu audio pour des instances de jeux hébergées sur le serveur de jeux en nuage (800) et pour diffuser en continu le contenu audio vers la pluralité de dispositifs clients de jeu.
